# EUROPÄISCHE PATENTSCHRIFT

(11) **EP 2 900 989 B1**
(45) Veröffentlichungstag und Bekanntmachung des Hinweises auf die Patenterteilung: **26.02.2025**
(21) Anmeldenummer: 13753099.4
(22) Anmeldetag: 16.08.2013
(51) Int. Cl.: F02D 41/02, F02D 41/40, F01N 13/02, F01N 3/023, F02D 41/00, F01N 3/10, F01N 3/20, F01N 9/00, F02D 13/02, F02D 41/04, F02M 26/15, F02M 26/43

(54) **VERFAHREN ZUM BETREIBEN EINER BRENNKRAFTMASCHINE UND BRENNKRAFTMASCHINE**
METHOD FOR OPERATING AN INTERNAL COMBUSTION ENGINE, AND INTERNAL COMBUSTION ENGINE
PROCÉDÉ PERMETTANT DE FAIRE FONCTIONNER UN MOTEUR À COMBUSTION INTERNE ET MOTEUR À COMBUSTION INTERNE

(30) Priorität: 26.09.2012 DE 102012018953
(43) Veröffentlichungstag der Anmeldung: 05.08.2015
(73) Patentinhaber: Daimler Truck AG, 70771 Leinfelden-Echterdingen (DE)
(72) Erfinder: KOCH, Thomas, 76327 Pfinztal-Berghausen (DE); MASSNER, Alexander, 73730 Esslingen (DE); ZIMMERMANN, Frank, 70372 Stuttgart (DE); ZÖLLER, Herbert, 70378 Stuttgart (DE)
(74) Vertreter: JENSEN & SON
(86) Internationale Anmeldenummer: PCT/EP2013/002469
(87) Internationale Veröffentlichungsnummer: WO 2014/048527

(56) Entgegenhaltungen:
- EP-A1- 1 980 725
- EP-A2- 1 291 513
- EP-A2- 1 384 879
- DE-A1- 102006 028 436
- DE-T2- 60 307 746
- US-A1- 2005 241 299
- VERBEEK R ET AL: "DAF EURO-4 HEAVY DUTY DIESEL ENGINE WITH TNO EGR SYSTEM AND CRT PARTICULATES FILTER", SAE TECHNICAL PAPER SERIES, SOCIETY OF AUTOMOTIVE ENGINEERS, WARRENDALE, PA, US, 1 January 2000 (2000-01-01), pages 1 - 09, XP001116163, ISSN: 0148-7191

## Beschreibung

Die Erfindung betrifft ein Verfahren zum Betreiben einer Brennkraftmaschine nach dem Oberbegriff des Anspruchs 1 sowie eine zur Durchführung des Verfahrens ausgebildete Brennkraftmaschine.

In der Fahrzeugtechnik ist es üblich, Rußpartikel aus dem Abgas insbesondere von Dieselmotoren mittels eines Partikelfilters herauszufiltern. Hierbei ist man bestrebt, eine übermäßige Ansammlung von herausgefilterten Partikeln im Partikelfilter zu vermeiden. Im Partikelfilter angesammelte Rußpartikel können bei Temperaturen oberhalb von etwa 250° C kontinuierlich durch Oxidation mit NO₂ und H₂O als Oxidationsmittel entfernt werden. Dieser Effekt ist auch als CRT-Effekt bekannt (CRT = Continuous Regeneration Trap, Filter mit kontinuierlicher Regeneration). Da die im Abgas enthaltenen Stickoxide üblicherweise fast ausschließlich aus NO bestehen, ist es üblich, die NO₂-Anteile durch Oxidation dieses NO an einem dem Partikelfilter vorgeschalteten Oxidationskatalysator zu erhöhen. Ein dementsprechendes System aus Dieseloxidationskatalysator (DOC) und Dieselpartikelfilter (DPF) ist als CRT-System^{™} bekannt.

Die Bildung von NO₂ am Oxidationskatalysator wird durch hohe Anteile von Edelmetallen wie beispielsweise Platin und Platingruppenmetallen verbessert, wobei dies mit entsprechenden Kosten verbunden und deshalb nachteilig ist. Reicht die durch den CRT-Effekt bewirkte Rußentfernungsrate nicht aus, so wird der Partikelfilter aktiv regeneriert, indem der Ruß thermisch abgebrannt wird, und zwar mittels des im Abgas enthaltenen Sauerstoffs. Dieses thermische Regenerieren erfordert jedoch deutlich höhere Temperaturen von typischerweise mehr als über 550° C. Derartig hohe Temperaturen treten beim normalen Fahrbetrieb insbesondere bei Dieselmotoren jedoch selten auf, und müssen daher häufig durch inner- und/oder außermotorische Maßnahmen bereitgestellt werden. Dies kann beispielsweise durch eine Anreicherung von Abgas mit Brennstoff, insbesondere in Form von unverbranntem oder teilverbranntem Kraftstoff, mittels einer motorischen Kraftstoff-Nacheinspritzung und einer nachfolgenden exothermen Oxidation dieses Kraftstoffes in einem dem Partikelfilter vorgeschalteten Oxidationskatalysator und/oder im Partikelfilter selbst erfolgen. Dabei kann die Aufheizung des Partikelfilters durch geeignete Einstellung der Nacheinspritz-Parameter wie Nacheinspritz-Zeitpunkt und -Menge beeinflusst werden. Eine Vielzahl von Variationsmöglichkeiten ist beispielsweise in der WO 2005/003537 A1 beschrieben.

Aus der EP 1 384 879 A2 ist eine Vorrichtung zur Abgasreinigung bekannt, welche einen Dieselpartikelfilter und einen davor angeordneten Oxidationskatalysator umfasst. Die bei der Oxidation von nacheingespritztem Kraftstoff erzeugte Wärme wird zur Aufheizung des Partikelfilters genutzt. Wenn die Temperatur des Oxidationskatalysators eine Schwelle erreicht oder unterschreitet, wird die Nacheinspritzung gedrosselt.

Weiterhin zeigt die DE 10 2006 028436 A1 ein Verfahren zum Betreiben einer Vorrichtung zur Abgasreinigung einer Brennkraftmaschine mit einem Partikelfilter und einer katalytischen Schicht, bei dem während bestimmter Betriebsphasen der Regenerierung des Partikelfilters der Luftdurchsatz durch einen Brennraum der Brennkraftmaschine reduziert wird.

Aufgabe der vorliegenden Erfindung ist es, ein Betriebsverfahren für eine Brennkraftmaschine anzugeben, welches eine Partikelfilterregeneration auch bei ungünstigen Betriebsbedingungen wirkungsvoll unterstützt. Weiter ist es Aufgabe der Erfindung, eine Brennkraftmaschine anzugeben, bei welcher Partikelfilterregeneration in einem möglichst weiten Betriebsbereich, insbesondere auch bei Teillast bzw. Niedriglast, ermöglicht sind.

Diese Aufgaben werden durch ein Verfahren mit den Merkmalen des Patentanspruchs 1 sowie durch eine Brennkraftmaschine mit den Merkmalen des Anspruchs 6 gelöst. Vorteilhafte Ausgestaltungen mit zweckmäßigen Weiterbildungen der Erfindung sind in den abhängigen Patentansprüchen angegeben.

Bei dem erfindungsgemäßen Verfahren erfolgen zur Unterstützung einer Regeneration eines in einem Abgastrakt der Brennkraftmaschine angeordneten und einem Oxidationskatalysator nachgeschalteten Partikelfilters Nacheinspritzungen von Kraftstoff mittels eines Einspritzventils in wenigstens einen Zylinder der Brennkraftmaschine. Erfindungsgemäß ist zusätzlich vorgesehen, eine Frühverschiebung für einen Öffnungszeitpunkt und einen Schließzeitpunkt eines Auslassventils eines Zylinders der Brennkraftmaschine vorzunehmen. Dabei wird die Frühverschiebung des Öffnungszeitpunkts und des Schließzeitpunkts in einem ersten Temperaturbereich für eine Temperatur des Oxidationskatalysators vorgenommen und die Nacheinspritzungen erfolgen in einem zweiten Temperaturbereich für die Temperatur des Oxidationskatalysators, wobei eine obere Bereichsgrenze des ersten Temperaturbereichs einen niedrigeren Wert aufweist als eine obere Bereichsgrenze des zweiten Temperaturbereichs.

Weiterhin wird die untere Bereichsgrenze des zweiten Temperaturbereichs so gewählt, dass sie wenigstens annähernd der Anspringtemperatur des Oxidationskatalysators entspricht.

Die obere Bereichsgrenze des ersten Temperaturbereichs fällt in den zweiten Temperaturbereich, wobei die obere Bereichsgrenze des ersten Temperaturbereichs nicht mehr als etwa 20K über der Anspringtemperatur liegt.

Mit zunehmender Temperatur des Oxidationskatalysators erfolgt innerhalb des ersten Temperaturbereichs im Wesentlichen eine Verringerung der Frühverschiebung für den Öffnungszeitpunkt und den Schließzeitpunkt des Auslassventils.

Im Bereich der Anspringtemperatur des Oxidationskatalysators erfolgt mit zunehmender Temperatur des Oxidationskatalysators eine zunehmend starke Verringerung der Frühverschiebung des Öffnungszeitpunkts und des Schließzeitpunkts.

Bei Erreichen der oberen Bereichsgrenze des ersten Temperaturbereichs wird die Frühverschiebung der Steuerzeiten vollkommen rückgängig gemacht.

Die Erfindung beruht auf der Erkenntnis, dass es sowohl zur Durchführung von diskontinuierlich vorgenommenen Partikelfilterregenerationen durch thermischen Rußabbrand, als auch zur Durchführung einer kontinuierlich erfolgenden Partikelfilterregeneration durch Rußoxidation mittels NO₂ insbesondere bei niedrigen Lasten der Brennkraftmaschine nötig sein kann, die Abgastemperatur auf ein dementsprechend erforderliches Niveau anzuheben. Dabei haben sich Kraftstoffnacheinspritzungen jedoch in zweifacher Weise als mit Nachteilen behaftet erwiesen. Einerseits kann eine Oxidation von durch Nacheinspritzungen ins Abgas eingebrachtem Brennstoff nicht erfolgen, wenn der Oxidationskatalysator eine Temperatur unterhalb seiner Anspringtemperatur aufweist, d.h. den in Form von unverbranntem oder teilverbranntem Kraftstoff vorliegenden Brennstoff noch nicht in nennenswertem Umfang oxidieren kann. Andererseits hat sich gezeigt, dass unverbrannte oder teilverbrannte Kraftstoffanteile im Abgas den Oxidationskatalysator insbesondere bei vergleichsweise niedrigen Temperaturen in Bezug auf seine Fähigkeit NO zu NO₂ zu oxidieren, inhibieren können. Dadurch, dass die temperatursteigernde Maßnahme der Frühverschiebung des Auslassventil-Schließzeitpunkts in einem im Wesentlichen niedrigeren Temperaturbereich vorgenommen wird wie die Nacheinspritzungen, können diese Nachteile vermieden werden. Ausgehend von niedrigen Temperaturen erfolgt zunächst eine Abgasaufheizung mittels der Frühverschiebung der Auslassventil-Steuerzeiten. Nachdem der Oxidationskatalysator ein geeignetes Temperaturniveau erreicht hat, erfolgt eine weitere Aufheizung durch Oxidation von durch die Nacheinspritzungen ins Abgas eingebrachtem Brennstoff.

Die Nacheinspritzungen erfolgen bevorzugt in einem Bereich von etwa 60° KW bis etwa 170° KW, besonders bevorzugt in einem Bereich von 90° KW bis 150° KW nach dem oberen Totpunkt im Arbeitstakt bei wenigstens einem Zylinder. So ergibt sich ein allenfalls vernachlässigbarer Einfluss der Nacheinspritzungen auf das von der Brennkraftmaschine abgegebene Drehmoment. Es wird dann im Wesentlichen unverbrannter, gegebenenfalls aber gecrackter Kraftstoff aus dem entsprechenden Zylinder ausgeschoben. Dieser Brennstoff besteht dann überwiegend aus kurz- bis mittelkettigen Kohlenwasserstoffen, Kohlenmonoxid und Wasserstoff. Werden Nacheinspritzungen vorgenommen, so erfolgt üblicherweise nach jeder drehmomentwirksamen Haupteinspritzung mindestens eine solche Nacheinspritzung.

Es können bis zu 5 einzelne Nacheinspritzungen je Arbeitstakt der nach dem Viertakt-Verfahren arbeitenden Brennkraftmaschine in einem Zeitfenster mit einer Dauer von etwa 20 ms erfolgen. Insbesondere können über eine Dauer von 0,2 ms bis 3 ms hinweg im Arbeitstakt eine oder mehrere Einspritzungen vorgenommen werden. Diese Dauer von beispielsweise 0,2 ms bis 3 ms stellt also das drehzahlabhängige zeitliche Zeitfenster pro Arbeitstakt oder Arbeitsspiel eines jeweiligen mit Nacheinspritzung betriebenen Zylinders dar.

Der zweite Temperaturbereich, d.h. der Temperaturbereich in welchem die Nacheinspritzungen vorgesehen sind, erstreckt sich vorzugsweise von etwa einer im Bereich der Anspringtemperatur des Oxidationskatalysators liegenden unteren Bereichsgrenze bis zur oberen Bereichsgrenze, welche als optimale Temperatur für die Ausbildung des CRT-Effektes gelten kann und etwa 450 °C für den Oxidationskatalysator beträgt. Unter der auch als Light-Off-Temperatur bezeichneten Anspringtemperatur eines Katalysators wird dabei üblicherweise diejenige Temperatur verstanden, ab welcher eine merkliche Menge, typischerweise ca. 50 %, der zu behandelnden Abgasbestandteile umgesetzt werden. Ein typischer Wert für die Anspringtemperatur liegt bei etwa 230 °C bis 250 °C.

Bei höheren Temperaturen in der Nähe der oberen Bereichsgrenze des zweiten Temperaturbereichs wird in vorteilhafter Weise durch Wärmeübertragung auch der nachgeschaltete Partikelfilter aufgeheizt. Ein Aufheizen des Oxidationskatalysators durch die Abgasanreicherung mit Brennstoff mittels innermotorischer Nacheinspritzung, so dass sich eine Abgastemperatur stromabwärts des Oxidationskatalysators von mehr als 330° C und damit eine Partikelfiltertemperatur von ebenfalls mehr als 330° C einstellt, kann jedoch durchaus ausreichend sein. Typischerweise liegt die obere Bereichsgrenze des zweiten Temperaturbereichs nicht über 480° C für den Oxidationskatalysator bzw. für auslassseitig des Oxidationskatalysators vorliegende Abgastemperaturen, um den Aufwand so niedrig wie möglich zu halten.

Durch die mittels der Nacheinspritzung bewirkte Einstellung der Temperatur des Oxidationskatalysators sind eine besonders effektive Oxidation von im Abgas enthaltenem Stickstoffmonoxid (NO) zu Stickstoffdioxid (NO₂) und eine besonders effektive Rußoxidation durch das erzeugte NO₂ ermöglicht. Dies ermöglicht es wiederum, einen Oxidationskatalysator mit einer verminderten Beladung der Edelmetalle Platin und/oder Palladium zu verwenden. Außerdem können Partikelfilterregenerationen durch thermischen Rußabbrand weitgehend vermieden werden. Dadurch werden die thermische Belastung des Oxidationskatalysators und nachteilige Alterungseffekte gering gehalten. Es muss daher kein oder nur ein geringer Edelmetallgehalt zur Kompensation eines alterungsbedingten Aktivitätsrückgangs vorgehalten werden. Bevorzugt wird daher vorliegend ein Oxidationskatalysators eingesetzt, dessen Edelmetallgehalt, bezogen auf ein Volumen des Oxidationskatalysators im Bereich von 170 g/m³ bis 700 g/m³ liegt, insbesondere einen Gehalt von etwa 350 g/m³ aufweist.

Edelmetallbeladungen von Katalysatoren werden auch in g/ft³ angegeben; in dieser Einheit entsprechen die zuvor genannten Größen Werten von 5 g/ft³ bis 20 g/ft³ bzw. bevorzugt von 10 g/ft³. Derartige Edelmetallbeladungen sind vergleichsweise niedrig gegenüber typischen Werten, welche im Bereich von etwa 40 g/ft³ bis 70 g/ft³ (1.412 g/ m³ bis 2.472 g/m³) liegen. Die

Edelmetalle können insbesondere Platin und/oder Palladium umfassen. Selbst mit einer solchen im Vergleich zu üblichen Werten geringen Edelmetallbeladung des Oxidationskatalysators lässt sich vorliegend eine signifikante Oxidations-Aktivität von NO zu NO₂ erreichen. Mit einem Oxidationskatalysator, welcher den vorliegend beschriebenen vergleichsweise niedrigen Edelmetallgehalt aufweist, lässt sich eine signifikante Rußumsatzrate auf Basis der CRT-Reaktion bereits ab einer Temperatur von mehr als ca. 230° C erreichen.

Was die Frühverschiebung für einen Schließzeitpunkt eines Auslassventils eines Zylinders betrifft, so hat diese zur Folge, dass das Auslassventil schließt, bevor ein Ausstoßtakt des jeweiligen Zylinders beendet ist. Dabei kommt es zu einer Zwischenkompression des Abgases im Zylinder. Bei dieser Zwischenkompression wird Kompressionsarbeit verrichtet, welche zu einer Erhöhung der Temperatur des Abgases führt. So lässt sich auf besonders aufwandsarme Art und Weise der Oxidationskatalysator aufheizen und insbesondere auf seine Anspringtemperatur bringen. Besonders bevorzugt ist es, wenn eine Frühverstellung des Schließzeitpunkts wenigstens eines Auslassventils bei allen Zylindern der Brennkraftmaschine vorgenommen wird.

Die Frühverschiebung des Auslassventil-Schließzeitpunkts kann insbesondere mittels eines sogenannten Phasenstellers, also einer variablen Nockenwellenverstellung, erfolgen. Der Phasensteller sorgt also dafür, dass das Auslassventil des entsprechenden Zylinders der Brennkraftmaschine früher schließt und bei üblichen Ausführungen des Phasenstellers damit auch früher öffnet.

Die Frühverschiebung des Auslassventil-Schließzeitpunkts stellt eine sehr wirksame Methode zur Abgasaufheizung dar, welche auch dann greift, wenn eine Nacheinspritzung diesbezüglich unwirksam ist, weil der Oxidationskatalysator noch unterhalb seiner Anspringtemperatur liegt. Der erste Temperaturbereich, bei welcher die Frühverschiebung vorgenommen wird, reicht daher vorzugsweise von sehr niedrigen Temperaturen von etwa 0 °C oder sogar niedrigeren Werten bis zu einer oberen Bereichsgrenze im Bereich der Anspringtemperatur des Oxidationskatalysators.

Durch die Wahl der unteren Bereichsgrenze des zweiten Temperaturbereichs annähernd gleich der Anspringtemperatur des Oxidationskatalysators erfolgt eine Anreicherung des Abgases mit Brennstoff als Folge der Nacheinspritzungen erst dann, wenn der Oxidationskatalysator auf seine Anspringtemperatur gebracht ist. So wird sichergestellt, dass der Oxidationskatalysator besonders weitgehend den in das Abgas eingebrachten Brennstoff umsetzen und so auf eine zum Bereitstellen von NO₂ geeignete Temperatur gebracht werden kann. Hierbei kann insbesondere vorgesehen sein, dass eine Abgasanreicherung bzw. Kraftstoff-Nacheinspritzungen erst dann aktiviert werden, wenn ein bestimmter Schwellenwert oder Triggerwert der Temperatur des Oxidationskatalysators von beispielsweise etwa 230 °C als untere Bereichsgrenze für den zweiten Temperaturbereich erreicht ist. Generell ist es bevorzugt, wenn eine Brennstoffanreicherung des Abgases in einem Temperaturbereich des Oxidationskatalysators von 250 °C bis 450 °C erfolgt. Somit ist sichergestellt, dass der Oxidationskatalysator zwar seine Anspringtemperatur erreicht hat, jedoch die Temperatur in einem Bereich bleibt, bei welcher sich thermische Schädigungen des Oxidationskatalysators besonders weitgehend vermeiden lassen.

Durch die Wahl der oberen Bereichsgrenze des ersten Temperaturbereichs im zweiten Temperaturbereich erfolgt ein gleitender Übergang zwischen dem Betrieb der Verbrennungskraftmaschine mit nach früh verschobener Steuerzeit des Auslassventils und dem Betrieb, in welchem Nacheinspritzungen vorgenommen werden. So kann beispielsweise insbesondere im Bereich der Anspringtemperatur des Oxidationskatalysators mit zunehmender Temperatur eine Kraftstoff-Nacheinspritzmenge, welche einen jeweiligen Zylinder der Brennkraftmaschine eingebracht wird, erhöht werden, während parallel eine Frühverstellung des Schließzeitpunkts des Auslassventils oder der Auslassventile, insbesondere im Vergleich zum reinen Aufheizbetriebs des Oxidationskatalysators, vermindert wird. So kann zu Beginn, wenn das Auslassventil noch vergleichsweise früh öffnet, nur eine geringe Menge an Kraftstoff über die Nacheinspritzung in den zweiten Zylinder eingebracht werden. Je weiter das Verschieben des Schließ- bzw. Öffnungszeitpunkts des Auslassventils in Richtung früh zurückgenommen wird, desto größer kann dann die Menge an in den Zylinder per Nacheinspritzung eingebrachtem Kraftstoff sein. So wird eine Zylinderwandbenetzung mit nacheingespritztem Kraftstoff weitgehend vermieden.

Eine unerwünschte Zylinderwandbenetzung kann resultieren, wenn bei frühem Schließen des Auslassventils dieses auch vergleichsweise früh geöffnet wird. In diesem Fall sinkt während des Arbeitstakts des jeweiligen Zylinders der Druck im Brennraum. Wenn zu diesem Zeitpunkt eine Nacheinspritzung erfolgt, besteht die Gefahr einer Benetzung der Zylinderwand mit Kraftstoff. Dies liegt daran, dass bei verringertem Druck im Brennraum der Kraftstoffstrahl während der Nacheinspritzung eine besonders große Reichweite hat. Eine Benetzung der Zylinderwand kann wiederum zu einer unerwünschten Verdünnung des Motorschmieröls führen. Um dies zu verhindern, kann vorgesehen sein, dass beim Vornehmen von Nacheinspritzungen keine Verschiebung der Steuerzeiten des Auslassventils in Richtung früh erfolgt und umgekehrt der Schließ- bzw. Öffnungszeitpunkt des Auslassventils lediglich dann in Richtung früh verschoben wird, wenn (noch) keine Nacheinspritzung vorgenommen wird. Es wird somit mit Nacheinspritzungen erst dann begonnen, wenn die Steuerzeiten des Auslassventils wieder denen eines Normalbetriebs ohne Zwischenkompression entsprechen. In diesem Fall fällt die obere Bereichsgrenze des ersten Temperaturbereichs mit der unteren Bereichsgrenze des zweiten Temperaturbereichs zusammen.

Durch die Verringerung der Frühverschiebung für Öffnungs- und Schließzeitpunkt des Auslassventils mit zunehmender Temperatur des Oxidationskatalysators wird diese insbesondere im Bereich der Anspringtemperatur oder kurz zuvor bis zu deren Erreichen rasch auf Null zurückgestellt und somit der normale Betriebszustand hergestellt. Eine weitere Aufheizung des Oxidationskatalysators erfolgt dann durch Oxidation von nacheingespritztem Kraftstoff.

In weiterer Ausgestaltung der Erfindung erfolgen die Nacheinspritzungen in wenigstens einen der Zylinder der Brennkraftmaschine derart getaktet, dass sich erste Zeitspannen vorgebbarer Dauer, in denen Nacheinspritzungen in jedem Arbeitszyklus eines jeweiligen Zylinders vorgenommen werden, mit zweiten Zeitspannen vorgebbarer Dauer, in denen die Nacheinspritzungen unterbunden werden, in direkter Folge abwechseln.

Je nach Aufheizbedarf sind eine mehr oder weniger große Anzahl von sich abwechselnden, direkt aufeinander folgenden ersten Zeitspannen mit Abgasanreicherung bzw. Kraftstoff-Nacheinspritzung in wenigstens einen Zylinder, und zweiten Zeitspannen ohne Abgasanreicherung bzw. Kraftstoff-Nacheinspritzung vorgesehen. Durch diese gepulste Brennstoff-Anreicherung des Abgases, bzw. durch das lediglich phasenweise Durchführen einer Nacheinspritzung in wenigstens einen Zylinder, lässt sich eine besonders hohe NO₂-Bildung am Oxidationskatalysator und ein besonders hohe Oxidationsrate von im Partikelfilter abgelagertem Ruß durch NO₂ und H₂O erreichen. Der CRT-Effekt ist also besonders stark ausgebildet. Dies liegt unter anderem daran, dass bei Brennstoff-Anreicherung des Abgases, also während der ersten Zeitspanne, der Oxidationskatalysator auf eine Temperatur gebracht wird, welche eine möglichst hohe Aktivität desselben in Bezug auf eine Oxidation von im Abgas enthaltenem NO zu NO₂ ermöglicht, die dann in der zweiten Zeitspanne auch ungehindert und ohne Inhibierung des Oxidationskatalysators durch CO und/oder HC erfolgen kann. Die gepulste Abgasanreicherung mit Brennstoff durch innermotorische Kraftstoff-Nacheinspritzung, bei welcher sich Phasen oder erste Zeitspannen mit Abgasanreicherung mit Phasen oder zweiten Zeitspannen ohne Abgasanreicherung abwechseln, führt somit zu einer effektiven, passiven Rußoxidation des Partikelfilters, also zu einem effektiven passiven Regenerieren desselben.

In den ersten Zeitspannen mit Abgasanreicherung bzw. Kraftstoff-Nacheinspritzung werden der Oxidationskatalysator, das Abgas und der dem Oxidationskatalysator nachgeschaltete Partikelfilter in Folge der exothermen Oxidation von unverbranntem und/oder teilverbranntem Kraftstoff im Oxidationskatalysator aufgeheizt. In Phasen ohne Abgasanreicherung bzw. Nacheinspritzung erfolgen eine Bildung von NO₂ und eine Rußoxidation durch den CRT-Effekt. Hierbei kühlen sich der Oxidationskatalysator und der Partikelfilter aufgrund ihrer Wärmekapazität nur wenig ab. Die zum Regenerieren des Partikelfilters vorzusehende Temperatur lässt sich also im Vergleich zu einer aktiven Regeneration mit thermischem Rußabbrand durch Oxidation mit Sauerstoff erheblich absenken. Damit geht eine Verringerung der thermischen Belastung des Oxidationskatalysators und des Partikelfilters einher, bei welchem es sich insbesondere um einen beschichteten, also katalytisch aktiven Partikelfilter handeln kann.

Infolge der geringen Temperaturbelastung ist eine Alterung von in der Abgasanlage verbauten Katalysatoren, also etwa den Oxidationskatalysator und den Partikelfilter sowie gegebenenfalls einen SCR-Katalysator (SCR = Selective Catalytic Reduction, selektive katalytische Reduktion) oder einen Ammoniak-Schlupf-Katalysator vermindert. Dies ermöglicht es insbesondere, eine Edelmetallbeladung des Oxidationskatalysators und/oder des Partikelfilters deutlich zu reduzieren. Der SCR-Katalysator und/oder der Ammoniak-Schlupf-Katalysator, welcher aus dem SCR gegebenenfalls austretenden Ammoniak oxidiert, können entsprechend klein dimensioniert werden. Des Weiteren können besonders kostengünstige Materialien für den SCR-Katalysator verwendet werden.

In der zweiten Zeitspanne, in welcher das Abgas typischerweise frei von unverbranntem Kraftstoff und demgegenüber vergleichsweise sauerstoffreich ist, erfolgt eine Reinigung der Katalysatoroberfläche des Oxidationskatalysators von absorbierten und inhibierenden Kraftstoffmolekülen. Es vergrößern sich dadurch die Verfügbarkeit und die katalytisch wirksame Oberfläche des Oxidationskatalysators.

So wird insgesamt eine Reinigung aller Motorkomponenten oder Komponenten der Abgasanlage durch intermittierende Beaufschlagung mit an Brennstoff angereichertem Abgas erreicht. Durch die Reinigung und Entgiftung des Oxidationskatalysators wird auch eine Absenkung der Anspringtemperatur des Oxidationskatalysators erreicht. Des Weiteren bringt die zeitliche Trennung des Aufheizens, also des Anreicherns von Abgas bzw. des Nacheinspritzens von Kraftstoff während der ersten Zeitspanne, von der passiven Regeneration während der zweiten Zeitspanne eine besonders gute passive Rußabbrandrate mit sich.

Dabei ist es vorgesehen, dass die Dauer der ersten Zeitspanne und/oder die Dauer der zweiten Zeitspanne in Abhängigkeit von der Temperatur des Oxidationskatalysators vorgegeben werden. Die Temperatur kann hierbei insbesondere stromabwärts des Oxidationskatalysators gemessen werden.

Bei vergleichsweise kaltem Oxidationskatalysator kann über eine längere erste Zeitspanne hinweg Kraftstoff in wenigstens einen Zylinder eingebracht werden als bei schon vergleichsweise heißem Oxidationskatalysator. Die erste Zeitspanne selber, also die Zeitspanne, in welcher überhaupt eine Abgasanreicherung erfolgt bzw. Nacheinspritzungen vorgenommen werden, liegt bevorzugt in einer Größenordnung von 1 s bis 300 s, insbesondere von 3 s bis 30 s. Die Dauer der zweiten Zeitspanne, während welcher das Anreichern mit Brennstoff bzw. Nacheinspritzen von Kraftstoff in einen zweiten Zylinder unterbunden wird, kann im Bereich von 0,5 s bis 200 s liegen, insbesondere in einem Bereich von 10 s bis 60 s. Diese zweite Zeitspanne oder Nacheinspritzpause ist hierbei variabel, und ihre Dauer ist prinzipiell auch unabhängig von der Dauer der ersten Zeitspanne. Es geht also mit einem Verkürzen oder Verlängern der ersten Zeitspanne nicht zwangsläufig eine Verkürzung oder Verlängerung der zweiten Zeitspanne einher. Mit den vorliegend beschriebenen Dauern der Zeitspannen lässt sich ein besonders weitgehendes passives Regenerieren des Partikelfilters mittels des CRT-Effekts erreichen.

Bei vergleichsweise kaltem Oxidationskatalysator, wenn dieser lediglich geringfügig über seine Anspringtemperatur aufgeheizt ist, ist es auch vorteilhaft, keine oder nur eine sehr kurze Nacheinspritzpause vorzusehen, während bei bereits vergleichsweise heißem Oxidationskatalysator eine entsprechend lange Nacheinspritzpause vorgesehen sein kann. Insbesondere kann in einem Temperaturfenster von 300° C bis 350° C der Temperatur des Oxidationskatalysators oder stromab davon keine oder allenfalls eine sehr kurze Nacheinspritzpause vorgesehen sein.

Des Weiteren kann eine Dauer, über welche je Arbeitstakt einzelne Kraftstoff-Nacheinspritzungen in den wenigstens einen Zylinder vorgenommen werden, in Abhängigkeit von der Temperatur eingestellt werden. Eine kurze solche Dauer je Arbeitstakt ist insbesondere dann günstig, wenn die Temperatur bereits hoch ist. So wird nämlich die hohe Temperatur auf einfache Weise aufrechterhalten, und dennoch ist aufgrund der kurzen Dauer eine Wandbenetzung des wenigstens einen zweiten Zylinders mit Kraftstoff besonders weitgehend unterbunden. Demgegenüber kann zum vergleichsweise starken Anheben der Temperatur des Oxidationskatalysators eine längere Dauer der Nacheinspritzungen insgesamt je Arbeitstakt vorgesehen sein, über welche hinweg in den wenigstens einen Zylinder wenigstens eine Nacheinspritzung vorgenommen wird. Dadurch ergeben sich große Einspritzmengen, welche zu einer entsprechend raschen Anhebung der Temperatur führen.

In weiterer Ausgestaltung der Erfindung ist eine geteilte Rückführung von Abgas der Zylinder der Brennkraftmaschine in einen Zulufttrakt der Brennkraftmaschine derart vorgesehen ist, dass Abgas lediglich eines ersten Teils der Zylinder zu einem nennenswerten Anteil dem Zulufttrakt der Brennkraftmaschine zuführbar ist und Abgas des verbleibenden zweiten Teils der Zylinder im Wesentlichen vollständig und unter Verzicht auf eine Rückführung dem Oxidationskatalysator zugeführt wird, wobei Nacheinspritzungen von Kraftstoff lediglich bei wenigstens einem der Zylinder des zweiten Teils der Zylinder erfolgen. Mit anderen Worten wird Abgas lediglich bei einem oder mehreren Zylindern angereichert, deren Abgas nicht rückgeführt wird. Oder anders ausgedrückt unterbleibt generell eine Brennstoff-Anreicherung von Abgas mittels Nacheinspritzung bei einem oder mehreren Zylindern deren Abgas rückgeführt wird.

Dem liegt die Erkenntnis zugrunde, dass es bei einer Brennstoffanreicherung des Abgases mit unverbranntem und/oder teilverbranntem Kraftstoff zu einer unerwünschten so genannten Versottung des Zulufttrakts kommen kann, wenn dieses Abgas rückgeführt wird. Dies wird vorliegend vermieden, da eine Anreicherung von Abgas lediglich bei dem/den Zylinder/Zylindern vorgenommen wird, dessen/deren Abgas nicht oder allenfalls in vernachlässigbarem Ausmaß in eine Abgasrückführungsleitung gelangen kann, über welche Abgas in den Zulufttrakt der Verbrennungskraftmaschine rückführbar ist. Durch die Vermeidung eines Beaufschlagens des Zulufttrakts und insbesondere eines in dem Zulufttrakt oder Ansaugluftpfad angeordneten Ladeluftkühlers mit unverbranntem Kraftstoff lässt sich auf besonders einfache Weise ein funktionssicherer Betrieb der Verbrennungskraftmaschine sicherstellen.

In einer weiteren vorteilhaften Ausgestaltung der Erfindung wird zur Durchführung der Nacheinspritzungen ein Ansteuerstrom des Einspritzventils zur Betätigung einer Ventilnadel des Einspritzventils in Abhängigkeit von einer Temperatur des Oxidationskatalysators eingestellt. Durch eine Veränderung des Ansteuerstroms ist eine besonders genaue Einstellung insbesondere von geringen Nacheinspritzmengen ermöglicht und eine Temperatureinstellung des Partikelfilters ist damit verbessert. Das erfindungsgemäße Verfahren ist insbesondere geeignet zur Unterstützung einer kontinuierlichen Partikelfilterregeneration durch Rußoxidation mit NO₂ entsprechend des CRT-Effektes. Bei dem Einspritzventil kann es sich um ein Elektromagnet- oder Piezo-Einspritzventil handeln. Im bevorzugten Fall eines Elektromagnetventils durchströmt der Ansteuerstrom eine Magnetspule, wodurch ein Anheben der Ventilnadel des Einspritzventils und somit eine Freigabe einer Ventilöffnung zur Nacheinspritzung von Kraftstoff bewirkt wird. Zeitdauer und Höhe des Nadelhubs bestimmen zusammen mit einem Kraftstoffeinspritzdruck in Verbindung mit dem Strömungsbeiwert des Einspritzventils die Menge des je Nacheinspritzung eingespritzten Kraftstoffs und damit die Menge der ins Abgas eingebrachten chemischen Energie, welche nach Umwandlung in Wärmeenergie durch exotherme Oxidation am Oxidationskatalysator oder im Partikelfilter zur Aufheizung zur Verfügung steht.

In weiterer Ausgestaltung der Erfindung wird oberhalb einer vorgebbaren Temperatur für den Oxidationskatalysator eine Nacheinspritzmenge dadurch begrenzt, dass bei den Nacheinspritzungen eine gegenüber einer maximalen Nadelhubamplitude verringerte Nadelhubamplitude der Ventilnadel des Einspritzventils eingestellt wird. Die Ventilnadel wird in diesem Fall nicht vollständig in ihre Endstellung in geöffnetem Zustand des Einspritzventils gebracht, wodurch geringe Nacheinspritzmengen auf genaue Weise einstellbar sind. Hierzu kann es vorgesehen sein, dass ein auf einen Wert unterhalb eines Ansteuerstrom-Nennwerts verminderter Ansteuerstrom eingestellt wird. Die zur Öffnungsbewegung der Ventilnadel erzeugte Magnetkraft ist in diesem Fall im Vergleich zu einer Ansteuerung mit dem Nennstrom verringert und die Öffnung des Einspritzventils erfolgt etwas langsamer und verzögert. Typischerweise fällt die Ventilnadel unmittelbar nach Erreichen der verminderten Hubamplitude zur Absetzung der Nacheinspritzung wieder ab. Die Dauer einer Nacheinspritzung innerhalb eines Arbeitstakts ist damit vergleichsweise gering. Dies ist insbesondere dann günstig, wenn die Temperatur bereits hoch ist. So wird nämlich die hohe Temperatur auf einfache Weise aufrechterhalten, und gleichzeitig ist aufgrund der kurzen Dauer eine Wandbenetzung des wenigstens einen mit Nacheinspritzung betriebenen Zylinders mit nacheingespritztem Kraftstoff weitgehend unterbunden.

Ein ähnliches Verhalten ergibt sich in einer weiteren vorteilhaften Variante, wenn zur Einstellung der verringerten Nadelhubamplitude eine Ansteuerdauer des Einspritzventils mit dem Ansteuerstrom vermindert wird. Unterhalb einer unteren Grenz-Ansteuerdauer erreicht bei einem mit dem Nennwert des Ansteuerstroms oder auch mit einem demgegenüber verminderten Ansteuerstrom angesteuerten Einspritzventil die Ventilnadel nicht mehr den maximal möglichen Hub, sondern nur einen demgegenüber verminderten Hub und fällt nach Erreichen dieser verminderten Hubamplitudenposition rasch wieder auf den Schließzustand zurück.

Die erfindungsgemäße Brennkraftmaschine weist einen Abgastrakt auf, in welchem ein Oxidationskatalysator und ein dem Oxidationskatalysator strömungsmäßig nachgeschalteter Partikelfilter angeordnet sind und ist mit Steuermitteln zur Durchführung eines Verfahrens entsprechend wenigstens einer der oben beschriebenen Varianten ausgebildet. Insbesondere zur Ausübung der Steuerfunktionen sind entsprechende Steuermittel wie ein elektronisches Steuergerät und entsprechende Aktuatoren und Sensoren vorgesehen.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine Anordnung einer Abgasanlage an einer Brennkraftmaschine eines Fahrzeugs, wobei lediglich in zwei Zylinder der Brennkraftmaschine Kraftstoff nacheingespritzt wird, aus welchen kein Abgas rückgeführt wird;
- Fig. 2: das Verschieben eines Öffnungszeitpunkts und eines Schließzeitpunkts eines Auslassventils eines der Zylinder der Brennkraftmaschine sowie die mit diesem Verschieben einhergehende Veränderung des Drucks im Brennraum;
- Fig. 3: einen Graphen zur Veranschaulichung der Vorgehensweise bei einer Frühverstellung von Auslassventil-Steuerzeiten in Verbindung mit einer Einstellung von Nacheinspritzmengen;
- Fig. 4: einen Graphen, welcher einen vorteilhaften Verlauf der Abhängigkeit einer Ansteuerdauer eines Einspritzventils der Brennkraftmaschine von der Temperatur eines der Brennkraftmaschine zugeordneten Oxidationskatalysators;
- Fig. 5: Kurven, welche das gepulste Nacheinspritzen von Kraftstoff, das damit verbundene Aufheizen eines Oxidationskatalysators der Abgasanlage und die mit dem gepulsten Nacheinspritzen einhergehenden Veränderungen des Gehalts an NO₂ im Abgas veranschaulichen;
- Fig. 6: einen Graphen, welcher den zeitlichen Verlauf eines Ansteuerstroms und einer Nadelöffnung bei der Durchführung von Nacheinspritzungen veranschaulicht;
- Fig. 7: einen weiteren Graphen, bei welcher der volle Ansteuerstrom über eine kürzere Zeitdauer aufgebracht wird als bei dem Graphen gemäß Fig. 6;
- Fig. 8: einen Graphen gemäß Fig. 7, bei welchem jedoch zusätzlich eine Amplitude des Ansteuerstroms gegenüber dem Graphen gemäß Fig. 7 verringert ist;
- Fig. 9: einen Graphen gemäß Fig. 7, jedoch mit einer weiter verringerten Dauer über welche der Ansteuerstrom aufgebracht wird;
- Fig. 10: das Vergrößern der Nacheinspritzpause zwischen Zeitspannen, während welchen Nacheinspritzungen vorgenommen werden, in Abhängigkeit von der Temperatur des Oxidationskatalysators; und
- Fig. 11: ein Diagramm zur Veranschaulichung einer vorteilhaften Abhängigkeit der Einspritzventil-Ansteuerdauer und der Nacheinspritzpause von der Temperatur des Oxidationskatalysators.

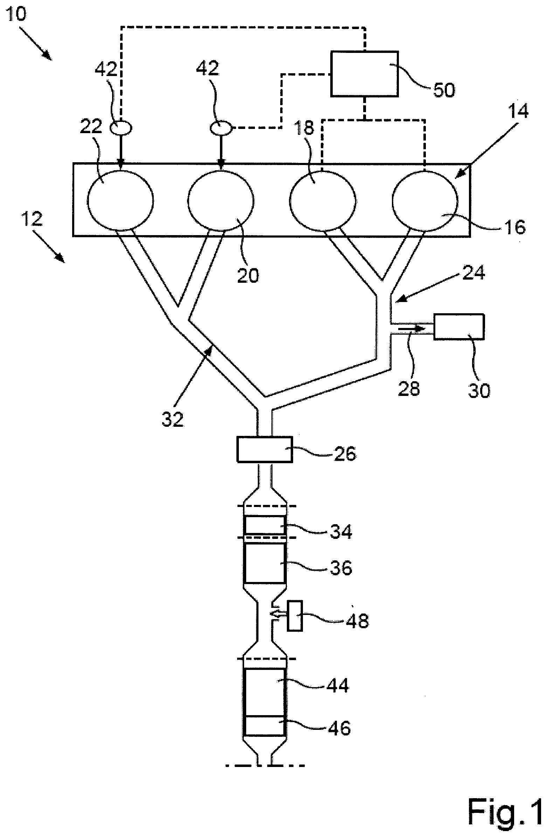

Fig. 1 zeigt eine Anordnung 10 einer Abgasanlage 12 an einer als direkt einspritzender 4-Takt-Dieselmotor ausgebildeten Brennkraftmaschine 14 eines Fahrzeugs, insbesondere eines Nutzfahrzeugs. Der Dieselmotor 14 weist vorliegend vier Zylinder 16, 18, 20, 22 auf. Eine Gruppe von vorliegend zwei ersten Zylindern 16, 18 ist über eine Abgasleitung 24 mit einer Turbine 26 eines Abgasturboladers fluidisch gekoppelt. Von der Abgasleitung 24, in welche das Abgas der beiden ersten Zylinder 16, 18 gelangt, zweigt eine Abgasrückführleitung 28 ab. Die Abgasrückführleitung 28 ist vorliegend als Hochdruck-Abgasrückführleitung ausgebildet, es kann jedoch zusätzlich auch eine Niederdruck-Abgasrückführung vorgesehen sein. Über ein lediglich schematisch gezeigtes Abgasrückführungsventil 30 kann die Menge an in einen (nicht gezeigten) Zulufttrakt des Verbrennungsmotors 14 rückgeführtem Abgas eingestellt werden.

Die beiden weiteren, zweiten Zylinder 20, 22 des Verbrennungsmotors 14 sind über eine weitere Abgasleitung 32 fluidisch mit der Turbine 26 gekoppelt. Von dieser zweiten Abgasleitung 32 zweigt jedoch keine Abgasrückführleitung ab. Von den zweiten Zylindern 20, 22 abgegebenes Abgas kann daher nicht oder allenfalls zu einem vernachlässigbaren Anteil in die Abgasrückführleitung 28 gelangen und zur Einlassseite des Verbrennungsmotors 14 gelangen. Die Abgasleitungen 24 und 32 können Bestandteile eines zweiteilig ausgebildeten Abgaskrümmers sein.

Die Abgasanlage 12 umfasst einen stromabwärts der Turbine 26 angeordneten Oxidationskatalysator 34, insbesondere Dieseloxidationskatalysator, welchem ein Partikelfilter 36, insbesondere Dieselpartikelfilter, nachgeschaltet ist. Bei dem Partikelfilter 36 kann es sich insbesondere um einen oxidationskatalytisch beschichteten Partikelfilter handeln. Stromabwärts des Partikelfilters 36 kann in der Abgasanlage 12 ein SCR-Katalysator 44 vorgesehen sein, welchem ein (optionaler) Katalysator zum Oxidieren von Ammoniak, also ein sogenannter Ammoniak-Schlupf-Katalysator 46, nachgeschaltet sein kann. Wenn ein SCR-Katalysator 44 vorgesehen ist, so erfolgt stromaufwärts desselben über ein Dosiergerät 48 eine Zudosierung von einer Reduktionsmittellösung zur selektiven Stickoxidreduktion, vorzugsweise einer wässrigen Harnstofflösung, aus welcher sich im heißen Abgas Ammoniak bildet. Dieser wird dann im SCR-Katalysator 44 (SCR = Selective Catalytic Reduction, selektive katalytische Reduktion) in einer selektiven katalytischen Reduktionsreaktion mit im Abgas enthaltenen Stickoxiden zu Stickstoff und Wasser umgesetzt.

Zum Betrieb des Dieselmotors 14 wird über nicht dargestellte Einspritzventile Kraftstoff in die Zylinder 16, 18.20, 22 eingespritzt, wozu die Einspritzventile von einem Steuergerät 50 mit einem Ansteuerstrom entsprechend angesteuert werden. Ohne Einschränkung der Allgemeinheit wird nachfolgend davon ausgegangen, dass es sich bei den Einspritzventilen um solche mit elektromagnetisch betätigter Ventilnadel handelt. Dabei können je Arbeitszyklus eine Mehrzahl von einzelnen Kraftstoff-Einspritzungen vorgenommen werden. Vorliegend wird mit Hilfe einer innermotorische Kraftstoff-Nacheinspritzung eine Temperaturanhebung des Oxidationskatalysators 34 erreicht, damit dieser besonders effizient im Abgas vorliegendes NO zu NO₂ oxidieren kann. Dabei kann eine Kraftstoff-Nacheinspritzung mehrere, insbesondere bis zu 5 einzelne Nacheinspritzvorgänge innerhalb eines Arbeitstaktes eines mit Nacheinspritzung betriebenen Zylinders beinhalten. Nachfolgend wird vereinfachend von einer Nacheinspritzung gesprochen. Rußpartikel, welche sich am Partikelfilter 36 angesammelt haben, können durch das am Oxidationskatalysator 34 gebildete NO₂ und durch H₂O oxidiert werden. Diese passive Regeneration des Partikelfilters 36 mit Rußoxidation mit NO₂ läuft bevorzugt in einem Temperaturbereich oberhalb von etwa 300° C ab, also in einem Temperaturbereich, in welchem eine thermische Alterung des Oxidationskatalysators 34 auf ein vergleichsweise geringes Maß begrenzt ist. Ideal und besonders bevorzugt ist eine Temperatur von etwa 450 °C.

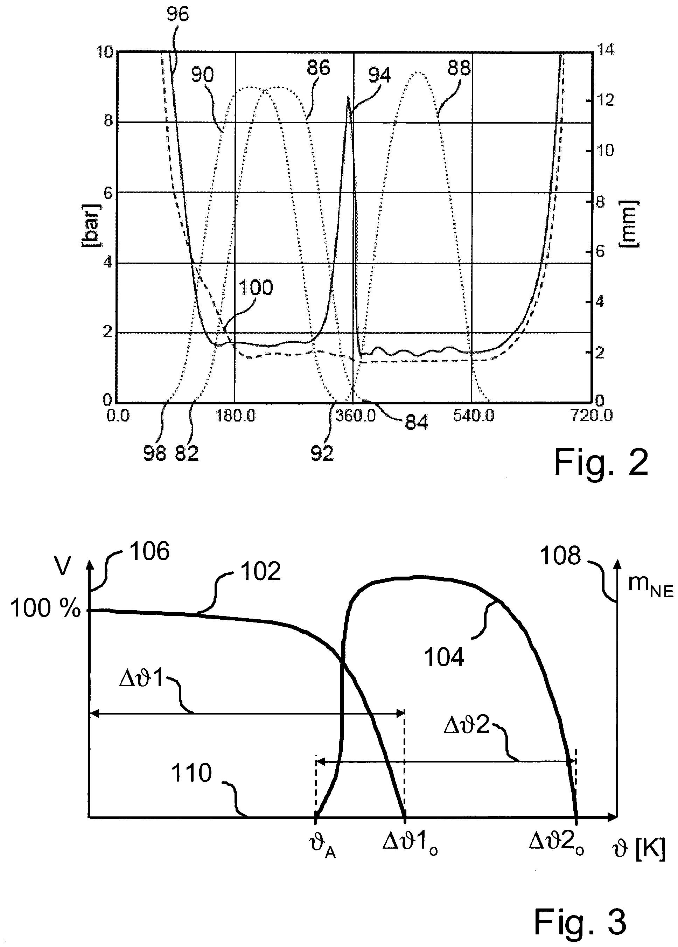

Liegt die Temperatur des Oxidationskatalysators 34 unterhalb der Anspringtemperatur, so ist eine Nacheinspritzung zur Aufheizung nicht zweckmäßig und vorzugsweise auch nicht oder nur in einem sehr geringen Umfang vorgesehen. In einem solchen Fall erfolgt eine Aufheizung des Oxidationskatalysators 34 bevorzugt durch eine Verschiebung der Steuerzeiten wenigstens eines Auslassventils bei wenigstens einem der Zylinder 16, 18, 20, 22 des Dieselmotors 14. Hierzu wird vorliegend bevorzugt ein Phasensteller eingesetzt. Durch eine solche variable Nockenwellensteuerung werden ein Öffnungszeitpunkt 82 und ein Schließzeitpunkt 84 eines Auslassventils (vgl. Fig. 2) insbesondere des jeweiligen zweiten Zylinders 20, 22 in Richtung früh verschoben. Es kann eine Frühverschiebung von bis zu etwa 60 °KW vorgesehen sein.

Dies ist in Fig. 2 veranschaulicht, in welcher eine Kurve 86 den Hub eines Auslassventils im Normalbetrieb des Dieselmotors 14 zeigt. Entsprechend schließt das Auslassventil, wenn ein Einlassventil öffnet, dessen Hub durch eine weitere Kurve 88 veranschaulicht ist. Durch den Phasensteller werden nun der Öffnungszeitpunkt 82 und der Schließzeitpunkt 84 des Auslassventils in Richtung früh verschoben, wie dies in Fig. 2 durch eine weitere Kurve 90 veranschaulicht ist.

Entsprechend ist ein Schließzeitpunkt 92 des Auslassventils erreicht, bevor der Ausstoßtakt des jeweiligen Zylinders beendet ist. Dadurch ergibt sich im Brennraum des Zylinders eine Zwischenkompression, welche als Maximum 94 oder Peak einer weiteren, den Druck im Brennraum angebenden Kurve 96 in Fig. 2 veranschaulicht ist.

Ebenso wie der Schließzeitpunkt 92 ist auch ein Öffnungszeitpunkt 98 des Auslassventils in Richtung früh verschoben. Dies bewirkt, dass der Brennraumdruck absinkt, und zwar vorliegend im Bereich von etwa 140° KW. Zur Veranschaulichung dieses Absinkens des Drucks im Brennraum gibt in Fig. 2 eine weitere Kurve 100 die Druckverhältnisse im Brennraum beim normalen, der Kurve 86 entsprechenden Ansteuern des Auslassventils an.

Durch die mit der Zwischenkompression einhergehende Temperaturerhöhung, welche dadurch zustande kommt, dass das Restgas bei jetzt früher schließendem Auslassventil noch verdichtet wird, lässt sich der Oxidationskatalysator 34 besonders einfach und aufwandsarm auf seine Anspringtemperatur bringen. Vorzugsweise wirkt der Phasensteller auf alle Zylinder 16, 18, 20, 22 des Dieselmotors 14 in gleicher Weise.

Wenn jedoch bei aufgrund des frühen Öffnens des Auslassventils abgesenktem Druck im Brennraum eine Nacheinspritzung in denselben vorgenommen wird, so kann aufgrund des geringeren Gegendrucks im Zylinder der Kraftstoffstrahl mit höherem Impuls und größerem Masseanteil gegen die Zylinderwand spritzen. Dies führt zu einem unerwünschten Eintrag von Kraftstoff ins Motoröl.

Vorliegend werden daher bei aktiver Nacheinspritzung der Öffnungszeitpunkt 82 und der Schließzeitpunkt 84 des Auslassventils bevorzugt nicht oder nur wenig in Richtung früh verschoben, wenn Nacheinspritzungen stattfinden. Umgekehrt werden Nacheinspritzungen überhaupt und insbesondere mit größerer Menge an Kraftstoff 42 erst dann vorgenommen, wenn der nach früh verschobene Öffnungszeitpunkt 98 und der nach früh verschobene Schließzeitpunkt 92 wieder in Richtung normal verschoben sind.

Hierbei kann speziell im Bereich der Anspringtemperatur des Oxidationskatalysators 34 eine Überlappung derart vorgesehen sein, dass eine zunehmende Menge an Kraftstoff 42 mittels der Nacheinspritzung eingespritzt wird, während die nach früh verschobenen Zeitpunkte wieder zunehmend zu dem normalen Öffnungszeitpunkt 82 und dem normalen Schließzeitpunkt 84 hin verschoben werden. So wird die Benetzung der Zylinderwand mit während einer Nacheinspritzung eingebrachtem Kraftstoff 42 auf ein Minimum begrenzt.

Eine beispielhafte Vorgehensweise ist in Fig. 3 schematisch veranschaulicht. Im Graphen von Fig. 3 ist eine Kurve 102 einer auf einer linken Ordinate 106 abgetragenen Frühverschiebung V des Öffnungs- und Schließzeitpunkts 82, 92 eines jeweiligen Auslassventils zugeordnet. Eine Frühverschiebung V ist dabei in einem mit Δϑ1 bezeichneten ersten Temperaturbereich des Oxidationskatalysators 34 vorgesehen.

Ausgehend von niedrigen Temperaturen ϑ unterhalb der mit ϑ_{A} bezeichneten Anspringtemperatur des Oxidationskatalysators 34 wird die Frühverschiebung V von 100 %, entsprechend etwa 60 °KW, bis auf die Normalbetriebseinstellung mit auf einer Abszisse 110 abgetragener steigender Temperatur ϑ verringert. Insbesondere wird sie im Bereich der Anspringtemperatur ϑ_{A} zunehmend stark verringert. Bei Erreichen einer oberen Bereichsgrenze Δϑ1ₒ des ersten Temperaturbereichs Δϑ1 ist die Frühverschiebung V der Steuerzeiten vollkommen rückgängig gemacht und der in Bezug auf die Steuerzeiten der Auslassventile normale Betrieb des Dieselmotors 14 erreicht. Oberhalb der oberen Bereichsgrenze Δϑ1ₒ des ersten Temperaturbereichs Δϑ1 ist somit keine Frühverschiebung V der Steuerzeiten vorgesehen. Die obere Bereichsgrenze Δϑ1ₒ des ersten Temperaturbereichs Δϑ1 entspricht vorzugsweise etwa der Anspringtemperatur ϑ_{A} des Oxidationskatalysators 34, kann jedoch, wie in Fig. 3 dargestellt, auch etwas darüber liegen. Dadurch kann sichergestellt werden, dass der Oxidationskatalysator 34 mittels der Frühverschiebung V der Auslassventil-Steuerzeiten sicher auf bzw. über die Anspringtemperatur ϑ_{A} erwärmt wird. Es ist jedoch bevorzugt, dass die obere Bereichsgrenze Δϑ1ₒ des ersten Temperaturbereichs Δϑ1 nicht mehr als etwa 20 K über der Anspringtemperatur ϑ_{A} liegt.

Mit Erreichen der Anspringtemperatur ϑ_{A} vermag der Oxidationskatalysator 34 unverbrannte bzw. teilverbrannte Kraftstoffbestandteile umzusetzen, weshalb eine weitere Aufheizung mit Hilfe der oben beschriebenen Nacheinspritzung von Kraftstoff in wenigstens einen der zweiten Zylinder 20, 22 bewirkt werden kann. Eine in Fig. 3 als Kurve 104 dargestellte und auf der Ordinate 108 abgetragene Gesamt-Nacheinspritzmenge m_{NE} je Arbeitstakt wird daher so eingestellt, dass sie innerhalb eines zweiten Temperaturbereichs Δϑ2 mit zunehmender Temperatur ϑ zunächst zunehmend rasch ansteigt. Mit abnehmendem Aufheizbedarf und zunehmender Annäherung der Temperatur ϑ des Oxidationskatalysator 34 an die Zieltemperatur von etwa 450 °C nimmt die Gesamt-Nacheinspritzmenge m_{NE} dann wieder ab. Somit erfolgen Nacheinspritzungen lediglich in dem zweiten Temperaturbereich Δϑ2. Dabei entspricht die untere Bereichsgrenze des zweiten Temperaturbereichs Δϑ2 wenigstens annähernd der Anspringtemperatur ϑ_{A} des Oxidationskatalysators 34. Die vorgebbare obere Bereichsgrenze Δϑ2ₒ des zweiten Temperaturbereichs Δϑ2 entspricht der genannten Zieltemperatur, bei welcher ein wenigstens annähernd optimaler CRT-Effekt erzielt werden kann. Durch Kombination von Frühverschiebung V der Auslassventil-Steuerzeiten und der Nacheinspritzung kann somit auf effektive und Kraftstoff sparende Weise eine Aufheizung des Oxidationskatalysators 34 und somit eine NO₂-Bildung erzielt werden, welche eine effektive Rußoxidation im Partikelfilter 36 ermöglicht und daher thermische Partikelfilterregenerationen durch Sauerstoff induzierten Rußabbrand weitgehend vermeidet.

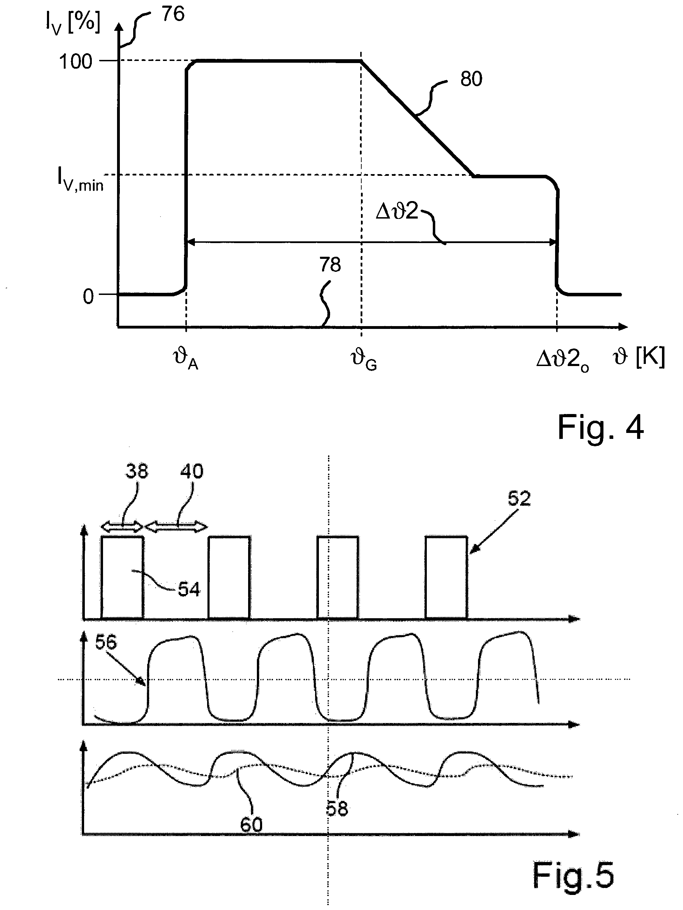

Es ist vorgesehen, dass bei den innermotorischen Kraftstoff-Nacheinspritzungen in einen jeweils mit Nacheinspritzung betriebenen Zylinder der Ansteuerstrom des jeweiligen Einspritzventils in Abhängigkeit von der Temperatur ϑ des Oxidationskatalysators 34 eingestellt wird. Dieser Sachverhalt ist beispielhaft durch ein in Fig. 4 dargestelltes Diagramm dargestellt. In diesem Diagramm gibt eine Kurve 80 den Verlauf des auf der Ordinate 76 abgetragenen Ansteuerstroms Iᵥ in Abhängigkeit von der auf der Abszisse 78 abgetragenen Temperatur ϑ des Oxidationskatalysators 34 wieder. Vorliegend wird mit Erreichen der Anspringtemperatur ϑ_{A} des Oxidationskatalysators 34 in Bezug auf eine Oxidation von Kohlenwasserstoffen ein jeweiliges Einspritzventil mit dem Nennwert des Ansteuerstroms Iᵥ angesteuert. Um den Oxidationskatalysator 34 möglichst rasch aufzuheizen, wird vorzugsweise zunächst eine vergleichsweise große Nacheinspritzmenge abgesetzt und eine Ansteuerdauer des Einspritzventils ist ebenfalls entsprechend lang, sodass die Ventilnadel des Einspritzventils bei einem Nacheinspritzvorgang voll öffnet.

Mit zunehmender Temperatur ϑ des Oxidationskatalysators 34 wird der Heizbedarf zunehmend geringer und deshalb die Nacheinspritzmenge verringert. Ab Erreichen einer vorgebbaren Grenztemperatur ϑ_{G} von etwa 380 °C bis 420 °C wird vorliegend die Nacheinspritzmenge dadurch verringert, dass der Ansteuerstrom Iᵥ mit weiter zunehmender Temperatur ϑ zunehmend verringert wird. Dies führt zunächst dazu, dass die Ventilnadel etwas verzögert und weniger rasch öffnet, weshalb bei gleicher Ansteuerdauer eine verringerte Kraftstoffmenge eingespritzt wird. Je nach Ansteuerdauer erreicht bei weiterer Verringerung des Ansteuerstroms Iᵥ die Ventilnadel nicht mehr ihre maximal mögliche Hubamplitude. Auf diese Weise ist eine besonders genaue Einstellung geringer Nacheinspritzmengen ermöglicht. Der Oxidationskatalysator 34 kann daher besonders effektiv auf einer erhöhten Temperatur gehalten werden bzw. ohne Gefahr einer zu starken Aufheizung auf eine angestrebte Zieltemperatur aufgeheizt werden. Dabei ist vorgesehen, den Ansteuerstrom Iᵥ bis höchstens zu einem Minimalwert I_{V,min} zu vermindern, um auch bei einem verminderten Ansteuerstrom Iᵥ ein Öffnen der Ventilnadel zu gewährleisten. Bei weiter zunehmender Temperatur ϑ des Oxidationskatalysators 34 ist ab Erreichen der oberen Bereichsgrenze Δϑ2ₒ von etwa 450 °C bis vorzugsweise höchstens 480 °C des zweiten Temperaturbereichs Δϑ2, in welchem überhaupt Nacheinspritzungen vorgesehen sind, kein weiteres Aufheizen mehr erforderlich und die Nacheinspritzungen werden beendet. Um bei Verminderung des Ansteuerstroms Iᵥ einen unerwünschten Einfluss auf die drehmomentwirksame Haupteinspritzung und auf eine gegebenenfalls vorgesehene Voreinspritzung zu vermeiden, ist es vorzugsweise vorgesehen, Zeitpunkt und Dauer dieser Kraftstoffeinspritzungen diesbezüglich kompensierend anzupassen.

Die mit einer Nacheinspritzung bewirkte Anreicherung des Abgases mit unverbranntem oder teilverbranntem Kraftstoff kann allerdings eine unerwünschte Inhibierung oder Passivierung des Oxidationskatalysators 34 in Bezug auf seine NO₂-Bildungsaktivität zur Folge haben. Um dennoch in möglichst hohem Umfang im Abgas enthaltenes NO zu NO₂ zu oxidieren, ist es vorzugsweise vorgesehen, die Nacheinspritzung immer wieder zu unterbrechen. Dadurch wird die Inhibierung beseitigt und der Oxidationskatalysator 34 kann wieder in verstärktem Maße NO zu NO₂ oxidieren. Um gleichzeitig eine Heizfunktion zu gewährleisten, ist es vorgesehen, den Dieselmotor 14 abwechselnd phasenweise mit und ohne Nacheinspritzung zu betreiben. Mit anderen Worten sind in dieser Betriebsart erste Zeitspannen vorgesehen, in denen eine Nacheinspritzung erfolgt, wobei diese erste Zeitspannen sich in direkter Folge mit zweiten Zeitspannen, in denen eine Nacheinspritzung unterbunden wird, abwechseln. Diese Vorgehensweise wird nachfolgend anhand von Fig. 5 näher erläutert.

In Fig. 5 ist ein Ausschnitt einer Mehrzahl von sich abwechselnden und unmittelbar aufeinander folgenden Zeitspannen dargestellt, in welchen eine Nacheinspritzung erfolgt und unterbunden ist. In einer ersten Phase oder Zeitspanne 38 werden Nacheinspritzungen in den Dieselmotor 14 vorgenommen, um die Temperatur des Oxidationskatalysators 34 zu erhöhen. In einer anschließenden zweiten Phase oder zweiten Zeitspanne 40 wird keine Nacheinspritzung vorgenommen, die Durchführung von Nacheinspritzungen also unterbunden. Die Nacheinspritzungen erfolgen vorliegend also gepulst oder getaktet, sodass sich die erste Zeitspanne 38 mit Nacheinspritzungen und die zweite Zeitspanne 40 ohne Nacheinspritzungen abwechseln.

Vorliegend wird jedoch lediglich in die zweiten Zylinder 20, 22 eine Nacheinspritzung von Kraftstoff 42 vorgenommen (vgl. Fig. 1), deren Abgas nicht rückgeführt wird, welche also an die zweite Abgasleitung 32 angeschlossen sind. In den beiden ersten Zylindern 16, 18 des Dieselmotors 14 findet demgegenüber keine Nacheinspritzung statt, sie werden also während der ersten Zeitspanne 38 nicht mit nacheingespritztem Kraftstoff 42 beaufschlagt.

Die Nacheinspritzung des Kraftstoffs 42 erfolgt also ausschließlich in die beiden zweiten Zylinder 20, 22 und nicht in die beiden ersten Zylinder 16, 18, deren Abgas zu einem mehr oder weniger großen Anteil in den Zulufttrakt rückgeführt wird bzw. rückgeführt werden kann. Dadurch wird eine Beaufschlagung der Abgasrückführleitung 28, eines (nicht gezeigten) Abgasrückführungskühlers sowie des Zulufttrakts mit nacheingespritztem, also unverbranntem Kraftstoff und somit eine so genannte Versottung vermieden.

Die Nacheinspritzung erfolgt bevorzugt im Bereich von 60 °KW bis 170 °KW nach dem oberen Totpunkt im Arbeitstakt der beiden zweiten Zylinder 20, 22. Besonders bevorzugt ist ein Bereich von 90 °KW bis 150 °KW nach dem oberen Totpunkt. Je einzelner Nacheinspritzung und je nach Temperatur des Oxidationskatalysators 34 kann eine Menge von 0 mg bis 60 mg Kraftstoff 42 pro Zylinder 20, 22 und Liter Hubraum des jeweiligen Zylinders 20, 22 frei eingestellt werden.

Vorzugsweise sorgt das Steuergerät 50 dafür, dass während der ersten Zeitspanne 38 in die vorliegend zwei ersten Zylinder 16, 18 kein Kraftstoff nacheingespritzt wird, während lediglich Abgas der beiden zweiten Zylinder 20, 22 über die Nacheinspritzung mit unverbrannte Kohlenwasserstoffen angereichert wird.

In Fig. 5 veranschaulichen in einer ersten Kurve 52 Balken 54 die Menge an Kraftstoff 42, welche über die innermotorische Nacheinspritzung während der ersten Zeitspanne 38 in die beiden zweiten Zylinder 20, 22 eingebracht wird.

Eine zweite Kurve 56 in Fig. 5 veranschaulicht das Verhältnis von NO₂ zu NOₓ stromabwärts des Oxidationskatalysators 34 infolge dieses intermittierenden oder gepulsten Betriebs, also des Beaufschlagens der beiden zweiten Zylinder 20, 22 mit dem nacheingespritzten Kraftstoff 42 und der daran anschließenden zweiten Zeitspanne 40, während welcher hauptsächlich das passive Regenerieren des Partikelfilters 36 stattfindet. In der Heizphase, also während der ersten Zeitspanne 38, liegt demnach so gut wie kein NO₂ im Abgas vor. Viel NO₂ wird jedoch dann gebildet, wenn während der zweiten Zeitspanne 40 kein Kraftstoff mehr in die zweiten Zylinder 20, 22 des Dieselmotors 14 nacheingespritzt wird. Während der zweiten Zeitspanne 40, also im Regenerationsmodus, steht somit eine vergleichsweise große Menge an NO₂ im Abgas zur Verfügung.

Eine weitere Kurve 58 veranschaulicht die Temperatur des Abgases stromabwärts des Oxidationskatalysators 34. Diese schwankt entsprechend der Beaufschlagung des Abgases mit Brennstoff im Heizmodus, ist also während der ersten Zeitspanne 38 höher als in der sich daran anschließenden Regenerationsphase oder zweiten Zeitspanne 40. Infolge der vergleichsweise hohen Wärmekapazität des Oxidationskatalysators 34 sind jedoch diese Schwankungen der Temperatur gedämpft. Noch stärker gedämpft ist die zeitlich verzögernd einsetzende Schwankung der Temperatur auslassseitig des Partikelfilters 36, welche in Fig. 5 durch eine weitere Kurve 60 veranschaulicht ist.

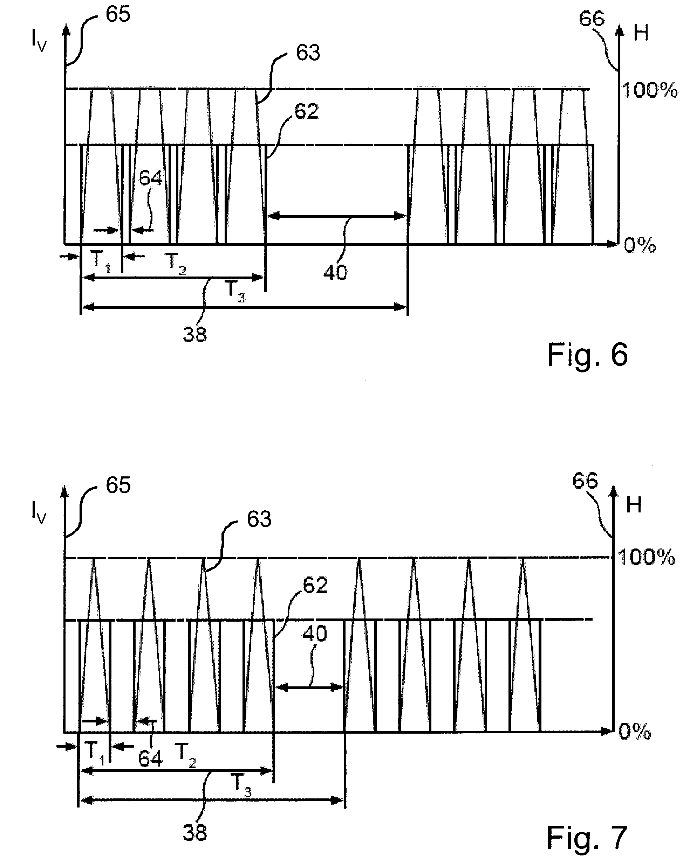

Fig. 6 zeigt detailliert, wie während der ersten Zeitspanne 38 ein jeweiliges Einspritzventil angesteuert wird, um den Kraftstoff 42 in die beiden zweiten Zylinder 20, 22 in einem einzelnen Nacheinspritzvorgang einzuspritzen. Hierbei bezeichnet T₁ die Ansteuerdauer des Einspritzventils zur Durchführung eines einzelnen Nacheinspritzvorgangs pro Arbeitstakt des zweiten Zylinders 20, 22, wobei die Ansteuerdauer T₁ insbesondere 0,2 ms bis 20 ms betragen kann. Während dieser Dauer können jedoch auch mehrere, typischerweise bis zu vier einzelne Nacheinspritzungen vorgenommen werden.

In Fig. 6 entspricht T₂ der ersten Zeitspanne 38, also einem Zeitraum, über welchen hinweg bei jedem Arbeitstakt in einen jeweiligen zweiten Zylinder 20, 22 Kraftstoff 42 nacheingespritzt wird. Dieser Zeitraum liegt in einer Größenordnung von 1 s bis 300 s Eine Nacheinspritzpause entspricht der zweiten Zeitspanne 40, und sie ergibt sich gemäß Fig. 6 aus der Differenz von T₃-T₂, wobei T₃ der Zeitraum vom Beginn einer ersten Nacheinspritzung bis zum Ende der Nacheinspritzpause ist.

Eine Kurve 62 gibt in Fig. 6 den Ansteuerstrom Iᵥ an, welcher das Öffnen des Einspritzventils bewirkt, und die Ventilnadel des Einspritzventils anhebt und somit eine Freigabe einer Ventilöffnung zur Nacheinspritzung von Kraftstoff bewirkt. Ein Wert des Ansteuerstroms Iᵥ ist auf einer linken Ordinate 65 des Graphen in Fig. 6 angegeben. Der Ansteuerstrom Iᵥ liegt während der Ansteuerdauer T₁ eines einzelnen Nacheinspritzvorgangs am Einspritzventil eines jeweiligen zweiten Zylinders 20, 22 an. In Fig. 6 ist eine weitere Zeitspanne 64 veranschaulicht, welche die Zeit zwischen zwei Arbeitstakten der zweiten Zylinder 20, 22 also die Zeit zwischen zwei Ansteuerdauern T₁ angibt. Diese Zeitspanne 64 ist entsprechend kurz bei hoher Drehzahl des Dieselmotors 14.

Bei der Betriebsweise gemäß Fig. 6 wird das jeweilige Einspritzventil mit einem vergleichsweise großen Ansteuerstrom Iᵥ beaufschlagt und dies mit einer vergleichsweise langen Ansteuerdauer T₁ hinweg. Entsprechend wird über einen vergleichsweise langen Zeitraum hinweg eine Nadelöffnung oder ein Ventilnadelhub H von 100 % entsprechend der maximalen Nadelhubamplitude erreicht, was durch eine Kurve 63 veranschaulicht ist, wobei ein Wert der Nadelöffnung H auf einer Ordinate 66 des Graphen in Fig. 6 angegeben ist. Eine solche Einstellung ist bei einer angestrebten raschen Aufheizung des Oxidationskatalysators 34 vorteilhaft. Insbesondere bei vergleichsweise hoher Last von mehr als etwa 60 % der Nennlast des Dieselmotors 14 und/oder bei stark wechselnder Last ist bei gleichzeitig verhältnismäßig langer Nacheinspritzpause von mehr als etwa dem Doppelten der ersten Zeitspanne T₂ eine Kraftstoff sparende Temperatureinstellung des Oxidationskatalysators 34 zur Erzielung eines hohen NO₂-Anteils im Abgas ermöglicht.

Eine an einen jeweiligen Heizbedarf für den Oxidationskatalysator 34 angepasste Nacheinspritzmenge lässt sich in vorteilhafter Weise beispielsweise nicht nur durch Verändern bzw. Vermindern des Ansteuerstroms Iᵥ, sondern auch durch Verändern der Ansteuerdauer T₁ erzielen. Bei einer in dem Graphen gemäß Fig. 7 veranschaulichten Betriebsweise des Dieselmotors 14 ist die Ansteuerdauer T₁ des Ansteuerstroms Iᵥ verkürzt und die Zeitspanne 64 entsprechend größer. Hierbei wird zwar auch eine Nadelöffnung H von 100 % erreicht, jedoch nur noch kurzzeitig. Es wird also eine geringere Menge an Kraftstoff 42 in die beiden zweiten Zylinder 20, 22 nacheingespritzt. Eine solche Betriebsweise ist insbesondere dann vorteilhaft, wenn lediglich ein vergleichsweise geringer Temperaturanstieg des Oxidationskatalysators 34 angestrebt ist, beispielsweise wenn der Oxidationskatalysator 34 bereits eine vergleichsweise hohe Temperatur ϑ von etwa 400 °C oder darüber aufweist. Ist dabei eine Motordrehzahl vergleichsweise niedrig, beispielsweise niedriger als 1500 1/min, so ist die Zeitspanne 64 entsprechend verlängert und es können je Zeiteinheit nur eine vergleichsweise niedrige Zahl von Nacheinspritzungen durchgeführt werden. In einem solchen Fall ist es vorteilhaft, die Einspritzpause T₃ - T₂ zu verkürzen und die erste Zeitspanne T₂ entsprechend, beispielsweise auf einen größeren Wert als die Nacheinspritzpause zu verlängern.

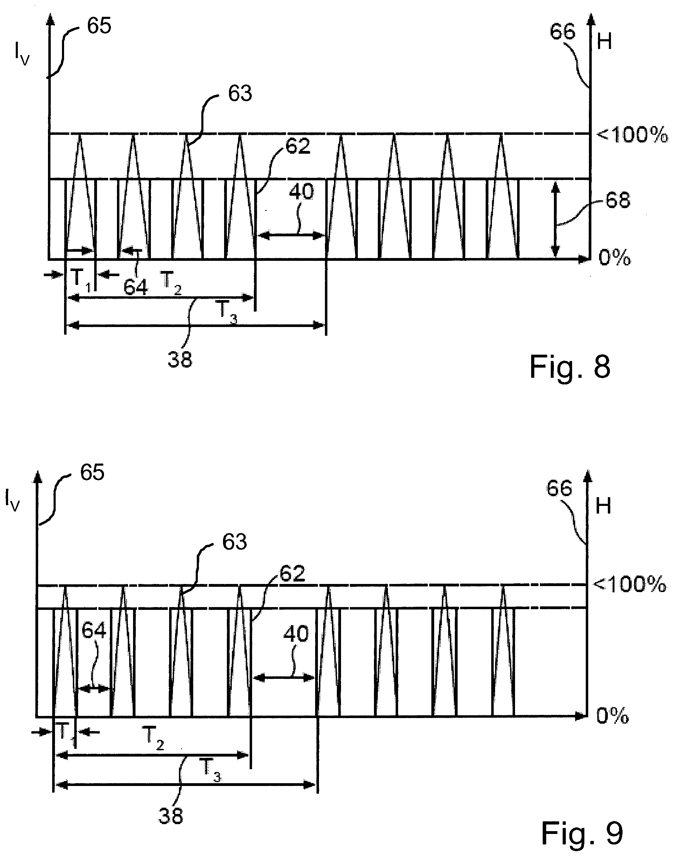

Wird bei verminderter Ansteuerdauer T₁ gemäß Fig. 7 zusätzlich der Ansteuerstrom Iᵥ verringert, so kann die Nacheinspritzmenge noch feiner eingestellt, insbesondere noch weiter vermindert werden. In einem solchen, in Fig. 8 veranschaulichten Fall erreicht der Nadelhub H nicht mehr den Wert der maximal möglichen Nadelhubamplitude sondern lediglich eine demgegenüber mehr oder weniger verminderte Nadelhubamplitude entsprechend der verminderten Höhe oder Amplitude 68 des Ansteuerstroms Iᵥ. Entsprechend wird selbst eine geringere Nadelöffnung H als die Nadelöffnung H von 100 % lediglich während einer sehr kurzen Dauer erreicht.

Bei der Betriebsweise des Verbrennungsmotors 14 gemäß Fig. 9 wird der verminderte Nadelhub H von weniger als 100 % durch Beaufschlagen des Einspritzventils mit dem Nenn-Ansteuerstrom Iᵥ analog Fig. 7 erreicht, jedoch bei weiter verminderter Ansteuerdauer T₁.

Somit kann sowohl durch eine Verminderung des Ansteuerstroms Iᵥ, als auch durch eine Verminderung der Ansteuerdauer T₁ eine gegenüber einer maximalen Nadelhubamplitude verringerte Nadelhubamplitude der Ventilnadel des Einspritzventils eingestellt und damit die Nacheinspritzmenge begrenzt werden. Dabei ist eine unvollständige Öffnung der Ventilnadel auf deren ballistische Eigenschaften zurückzuführen und der entsprechende Zustand kann auch als ballistischer Nadelhub bezeichnet werden.

Eine dadurch verringerte Menge an nacheingespritztem Kraftstoff 42 ist insbesondere dann vorgesehen, wenn der Oxidationskatalysator 34 eine vergleichsweise hohe Temperatur erreicht hat. Dann wird zwar die Temperatur des Oxidationskatalysators 34 besonders weitgehend aufrechterhalten, jedoch kommt es nicht zu einer unerwünschten Benetzung der Wände der zweiten Zylinder 20, 22 mit dem nacheingespritzten Kraftstoff 42.

Innerhalb der ersten Zeitspanne 38 ist eine volle Variabilität des Ansteuerdauer T₁ und der Amplitude 68 des Ansteuerstroms Iᵥ gegeben, wodurch flexibel und nahezu unabhängig vom Motorbetriebszustand, jedoch unter dessen Berücksichtigung, die Nacheinspritzmenge an einen Heizbedarf für den Oxidationskatalysator 34 bzw. den Partikelfilter 36 angepasst und gleichzeitig ein stark ausgeprägter CRT-Effekt erzielt werden kann.

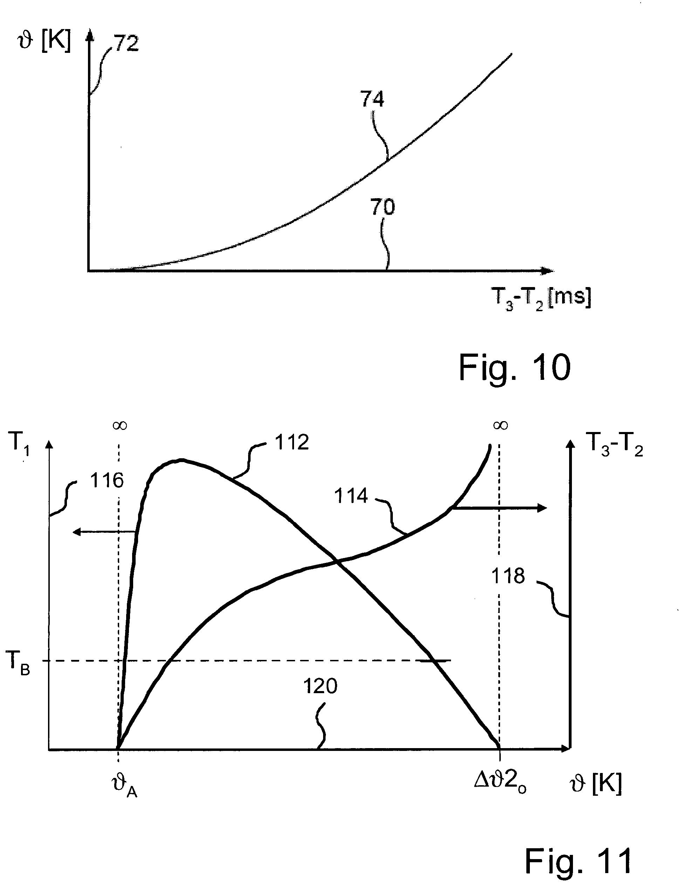

Ein Beispiel hierfür ist in einem in Fig. 10 gezeigten Diagramm veranschaulicht, bei welchem eine bevorzugt in Abhängigkeit von der Temperatur ϑ des Oxidationskatalysators 34 eingestellte Dauer der Nacheinspritzpause exemplarisch dargestellt ist. Dabei ist auf einer Abszisse 70 die Dauer der Nacheinspritzpause T₃-T₂ angegeben und auf einer Ordinate 72 die Temperatur ϑ auslassseitig des Oxidationskatalysators 34. Entsprechend der im Diagramm gezeigten Kurve 74 wird vorzugsweise und insbesondere in einem Temperaturbereich nahe einer Zieltemperatur von etwa 450 °C eine sich zunehmend verlängernde Nacheinspritzpause oder Zeitspanne 40 bei zunehmender Temperatur ϑ des Oxidationskatalysators 34 eingestellt. Bei weniger stark erwärmtem Oxidationskatalysator 34 wird je nach Aufheizbedarf keine oder nur eine sehr kurze Nacheinspritzpause eingestellt, während bei vergleichsweise heißem Oxidationskatalysator 34 eine längere zweite Zeitspanne 40 vorliegt.

Ein weiteres Beispiel für eine bevorzugte Vorgehensweise bei der Einstellung der gepulsten Nacheinspritzung ist in einem in Fig. 11 gezeigten Diagramm veranschaulicht, in welchem die Einstellung der Ansteuerdauer T₁ (Kurve 112) und der Nacheinspritzpause T₃ - T₂ (Kurve 114) in Abhängigkeit von der auf einer Abszisse 120 abgetragenen Temperatur ϑ des Oxidationskatalysators 34 dargestellt sind. Dabei ist die Ansteuerdauer T₁ einer linken Ordinate 116 und die Nacheinspritzpause T₃ - T₂ einer rechten Ordinate 118 zugeordnet. Analog zur Kurve 74 in Fig. 10 wird eine mit zunehmender Temperatur ϑ des Oxidationskatalysators 34 zunehmende Dauer der Einspritzpause eingestellt. Parallel hierzu wird mit Überschreiten der Anspringtemperatur ϑ_{A} des Oxidationskatalysators 34 eine zunächst rasch ansteigende Ansteuerdauer T₁ eingestellt. Dadurch wird eine vergleichsweise hohe Nacheinspritzmenge realisiert, welche ein rasches Aufheizen des Oxidationskatalysators 34 ermöglicht. Mit zunehmender Temperatur ϑ des Oxidationskatalysators 34 vermindert sich der Heizbedarf und die Ansteuerdauer T₁ wird verringert, bis bei Erreichen der vorgebbaren oberen Bereichsgrenze Δϑ2ₒ von etwa 450 °C des zweiten Temperaturbereichs Δϑ2 der Nacheinspritzbetrieb beendet wird. Dabei stellt sich unterhalb einer Ansteuerdauer T_{B} das weiter oben beschriebene ballistische Verhalten der Ventilnadel mit einer gegenüber der maximalen Hubamplitude verminderten Hubamplitude ein.

### Bezugszeichenliste

- 10: Anordnung
- 12: Abgasanlage
- 14: Brennkraftmaschine
- 16: Zylinder
- 18: Zylinder
- 20: Zylinder
- 22: Zylinder
- 24: Abgasleitung
- 26: Turbine
- 28: Abgasrückführleitung
- 30: Abgasrückführungsventil
- 32: Abgasleitung
- 34: Oxidationskatalysator
- 36: Partikelfilter
- 38: Zeitspanne
- 40: Zeitspanne
- 42: Kraftstoff
- 44: SCR-Katalysator
- 46: Ammoniak-Schlupf-Katalysator
- 48: Dosiergerät
- 50: Steuergerät
- 52: Kurve
- 54: Balken
- 56: Kurve
- 58: Kurve
- 60: Kurve
- 62: Kurve
- 63: Kurve
- 64: Zeitspanne
- 65: Ordinate
- 66: Ordinate
- 68: Amplitude
- 70: Abszisse
- 72: Ordinate
- 74: Kurve
- 76: Ordinate
- 78: Abszisse
- 80: Kurve
- 82: Öffnungszeitpunkt
- 84: Schließzeitpunkt
- 86: Kurve
- 88: Kurve
- 90: Kurve
- 92: Schließzeitpunkt
- 94: Maximum
- 96: Kurve
- 98: Öffnungszeitpunkt
- 100: Kurve
- 102: Kurve
- 104: Kurve
- 106: Ordinate
- 108: Ordinate
- 110: Abszisse
- 112: Kurve
- 114: Kurve
- 116: Ordinate
- 118: Ordninate
- 120: Abszisse

## Patentansprüche

1. Verfahren zum Betreiben einer Brennkraftmaschine (14), bei welchem zur Unterstützung einer Regeneration eines in einem Abgastrakt der Brennkraftmaschine (14) angeordneten und einem Oxidationskatalysator (34) nachgeschalteten Partikelfilters (36) Nacheinspritzungen von Kraftstoff mittels eines Einspritzventils in wenigstens einen Zylinder (16, 18, 20, 22) der Brennkraftmaschine (14) erfolgen,
**dadurch gekennzeichnet,**
**dass** eine Frühverschiebung (V) für einen Öffnungszeitpunkt (82) und einen Schließzeitpunkt (92) eines Auslassventils eines Zylinders (16, 18, 20, 22) der Brennkraftmaschine (14) derart vorgenommen wird, dass eine Zwischenkompression von Abgas in dem Brennraum des Zylinders (16, 18, 20, 22) erfolgt, wobei die Frühverschiebung (V) des Öffnungszeitpunkts (82) und des Schließzeitpunkts (92) in einem ersten Temperaturbereich (Δϑ1) für eine Temperatur (ϑ) des Oxidationskatalysators (34) vorgenommen wird und
die Nacheinspritzungen in einem zweiten Temperaturbereich (Δϑ2) für die Temperatur (ϑ) des Oxidationskatalysators (34) erfolgen, wobei
- eine obere Bereichsgrenze (Δϑ1ₒ) des ersten Temperaturbereichs (Δϑ1) einen niedrigeren Wert aufweist als eine obere Bereichsgrenze (Δϑ2ₒ) des zweiten Temperaturbereichs (Δϑ2);
- eine untere Bereichsgrenze des zweiten Temperaturbereichs (Δϑ2) wenigstens annähernd einer Anspringtemperatur (ϑ_{A}) des Oxidationskatalysators (34) entspricht;
- die obere Bereichsgrenze (Δϑ1ₒ) des ersten Temperaturbereichs (Δϑ1) in den zweiten Temperaturbereich (Δϑ2) fällt, wobei die obere Bereichsgrenze (Δϑ1ₒ) des ersten Temperaturbereichs (Δϑ1) nicht mehr als etwa 20 K über der Anspringtemperatur (ϑ_{A}) liegt;
- innerhalb des ersten Temperaturbereichs (Δϑ1) mit zunehmender Temperatur (ϑ) des Oxidationskatalysators (34) im Wesentlichen eine Verringerung der Frühverschiebung (V) für den Öffnungszeitpunkt (82) und den Schließzeitpunkt (92) des Auslassventils erfolgt;
- im Bereich der Anspringtemperatur (ϑ_{A}) des Oxidationskatalysators (34) mit zunehmender Temperatur (ϑ) des Oxidationskatalysators (34) eine zunehmend starke Verringerung der Frühverschiebung (V) des Öffnungszeitpunkts (82) und des Schließzeitpunkts (92) erfolgt; und
- bei Erreichen der oberen Bereichsgrenze (Δϑ1ₒ) des ersten Temperaturbereichs (Δϑ1) die Frühverschiebung (V) der Steuerzeiten vollkommen rückgängig gemacht wird.

2. Verfahren nach Anspruch 1,
**dadurch gekennzeichnet,**
**dass** die Nacheinspritzungen in wenigstens einen der Zylinder (16, 18, 20, 22) der Brennkraftmaschine (14) derart getaktet erfolgen, dass sich erste Zeitspannen (38) vorgebbarer Dauer, in denen Nacheinspritzungen in jedem Arbeitszyklus eines jeweiligen Zylinders vorgenommen werden, mit zweiten Zeitspannen (40) vorgebbarer Dauer, in denen die Nacheinspritzungen unterbunden werden, in direkter Folge abwechseln und die Dauer der ersten Zeitspanne (38) und/oder die Dauer der zweiten Zeitspanne (40) in Abhängigkeit von der Temperatur (ϑ) des Oxidationskatalysators (34) vorgegeben werden.

3. Verfahren nach Anspruch 2,
**dadurch gekennzeichnet,**
**dass** eine geteilte Rückführung von Abgas der Zylinder (16, 18, 20, 22) der Brennkraftmaschine (14) in einen Zulufttrakt der Brennkraftmaschine (14) derart vorgesehen ist, dass Abgas lediglich eines ersten Teils der Zylinder (16, 18, 20, 22) zu einem nennenswerten Anteil dem Zulufttrakt der Brennkraftmaschine (14) zuführbar ist und Abgas des verbleibenden zweiten Teils der Zylinder (16, 18, 20, 22) im Wesentlichen vollständig und unter Verzicht auf eine Rückführung dem Oxidationskatalysator (34) zugeführt wird, wobei Nacheinspritzungen von Kraftstoff lediglich bei wenigstem einem der Zylinder (20, 22) des zweiten Teils der Zylinder (16, 18, 20, 22) erfolgen.

4. Verfahren nach einem der Ansprüche 1 bis 3,
**dadurch gekennzeichnet,**
**dass** zur Durchführung der Nacheinspritzungen ein Ansteuerstrom (Iᵥ) des Einspritzventils zur Betätigung einer Ventilnadel des Einspritzventils in Abhängigkeit von einer Temperatur (ϑ) des Oxidationskatalysators (34) eingestellt wird.

5. Verfahren nach Anspruch 4,
**dadurch gekennzeichnet,**
**dass** oberhalb einer vorgebbaren Temperatur für den Oxidationskatalysator (34) eine Nacheinspritzmenge (m_{NE}) dadurch begrenzt wird, dass bei den Nacheinspritzungen eine gegenüber einer maximalen Nadelhubamplitude verringerte Nadelhubamplitude (H) der Ventilnadel des Einspritzventils eingestellt wird.

6. Brennkraftmaschine mit einem Abgastrakt, in welchem ein Oxidationskatalysator (34) und einem dem Oxidationskatalysator (34) strömungsmäßig nachgeschalteter Partikelfilter (36) angeordnet sind,
**dadurch gekennzeichnet,**
**dass** die Brennkraftmaschine mit Steuermitteln zur Durchführung eines Verfahrens nach einem der Ansprüche 1 bis 5 ausgebildet ist.

## Claims

1. A method of operating a combustion engine (14), in which post-injections of fuel by means of an injector valve occur in at least one cylinder (16, 18, 20, 22) of the combustion engine (14) for supporting regeneration of a particle filter (36) disposed in an exhaust tract of the combustion engine (14) downstream of an oxidation catalytic converter (34),
**characterised**
**in that** an advance (V) for an opening time (82) and a closing time (92) of an exhaust valve of a cylinder (16, 18, 20, 22) of the combustion engine (14) is performed such that intermediate compression of exhaust gas occurs in the combustion chamber of the cylinder (16, 18, 20, 22), wherein the advance (V) of the opening time (82) and the closing time (92) is performed in a first temperature range (Δϑ1) for a temperature (ϑ) of the oxidation catalytic converter (34), and
the post-injections occur in a second temperature range (Δϑ2) for the temperature (ϑ) of the oxidation catalytic converter (34), wherein
- a range upper limit (Δϑ1ₒ) of the first temperature range (Δϑ1) has a lower value than a range upper limit (Δϑ2ₒ) of the second temperature range (Δϑ2);
- a range lower limit of the second temperature range (Δϑ2) corresponds at least approximately to a light-off temperature (ϑ_{A}) of the oxidation catalytic converter (34);
- the range upper limit (Δϑ1ₒ) of the first temperature range (Δϑ1) falls in the second temperature range (Δϑ2), wherein the range upper limit (Δϑ1ₒ) of the first temperature range (Δϑ1) exceeds the light-off temperature (ϑ_{A}) by no more than about 20 K;
- within the first temperature range (Δϑ1), a reduction of the advance (V) for the opening time (82) and the closing time (92) of the exhaust valve substantially occurs with increasing temperature (ϑ);
- in the region of the light-off temperature (ϑ_{A}) of the oxidation catalytic converter (34), an increasingly high reduction of the advance (V) of the opening time (82) and the closing time (92) occurs with increasing temperature (ϑ) of the oxidation catalytic converter (34); and
- upon reaching the range upper limit (Δϑ1ₒ) of the first temperature range (Δϑ1), the advance (V) of the timings is fully reversed.

2. The method according to claim 1,
**characterised**
**in that** the post-injections in at least one of the cylinders (16, 18, 20, 22) of the combustion engine (14) occur in a timed manner such that first periods (38) of predetermined duration in which post-injections are performed in each working cycle of a respective cylinder, and second periods (40) of predetermined duration in which the post-injections are disabled, alternate in direct sequence and the duration of the first period (38) and/or the duration of the second period (40) are specified in dependence of the temperature (ϑ) of the oxidation catalytic converter (34).

3. The method according to claim 2,
**characterised**
**in that** a divided return of exhaust gas from the cylinders (16, 18, 20, 22) of the combustion engine (14) into an inlet air tract of the combustion engine (14) is provided such that exhaust gas from only a first portion of the cylinders (16, 18, 20, 22) can be delivered to the inlet tract of the combustion engine (14) in a significant percentage, and exhaust gas of the remaining second portion of the cylinders (16, 18, 20, 22) is delivered to the oxidation catalytic converter (34) substantially in full and without any return, wherein post-injections of fuel only occur with at least one cylinder (20, 22) of the second portion of the cylinders (16, 18, 20, 22).

4. The method according to any of claims 1 to 3,
**characterised**
**in that** for performing the post-injections, a driving current (Iᵥ) of the injector valve for actuating a valve needle of the injector valve is adjusted in dependence of a temperature (ϑ) of the oxidation catalytic converter (34).

5. The method according to claim 4,
**characterised**
**in that** above a specifiable temperature for the oxidation catalytic converter (34), a post-injection quantity (m_{NE}) is limited by a needle stroke amplitude (H), which is reduced with respect to a maximum needle stroke amplitude of the valve needle being set for the post-injections.

6. A combustion engine comprising an exhaust tract, in which an oxidation catalytic converter (34) and a particle filter (36) downstream of the oxidation catalytic converter (34) are disposed,
**characterised**
**in that** the combustion engine is configured with control means for performing a method according to one of claims 1 to 5.

## Revendications

1. Procédé d'exploitation d'un moteur à combustion interne (14), lors duquel des injections secondaires de carburant ont lieu au moyen d'une soupape d'injection dans au moins un cylindre (16, 18, 20, 22) du moteur à combustion interne (14) pour le soutien d'une régénération d'un filtre à particules (36) disposé dans une voie de gaz d'échappement du moteur à combustion interne (14) et monté en aval d'un catalyseur d'oxydation (34),
**caractérisé en ce**
**qu'**un décalage précoce (V) pour un instant d'ouverture (82) et un instant de fermeture (92) d'une soupape de sortie d'un cylindre (16, 18, 20, 22) du moteur à combustion interne (14) est réalisé de telle sorte qu'une compression intermédiaire de gaz d'échappement dans l'espace de combustion du cylindre (16, 18, 20, 22) a lieu, dans lequel le décalage précoce (V) de l'instant d'ouverture (82) et de l'instant de fermeture (92) est réalisé dans une première plage de température (Δϑ1) pour une température (ϑ) du catalyseur d'oxydation (34) et
les injections secondaires ont lieu dans une seconde plage de température (Δϑ2) pour la température (ϑ) du catalyseur d'oxydation (34), dans lequel
- une limite de plage supérieure (Δϑ1ₒ) de la première plage de température (Δϑ1) présente une valeur inférieure à une limite de plage supérieure (Δϑ2ₒ) de la seconde plage de température (Δϑ2) ;
- une limite de plage inférieure de la seconde plage de température (Δϑ2) correspond à au moins approximativement une température d'amorçage (ϑ_{A}) du catalyseur d'oxydation (34) ;
- la limite de plage supérieure (Δϑ1ₒ) de la première plage de température (Δϑ1) tombe dans la seconde plage de température (Δϑ2), dans lequel la limite de plage supérieure (Δϑ1ₒ) de la première plage de température (Δϑ1) se situe à pas plus d'environ 20 K au-dessus de la température d'amorçage (ϑ_{A}) ;
- une réduction du décalage précoce (V) pour l'instant d'ouverture (82) et l'instant de fermeture (92) de la soupape de sortie a essentiellement lieu au sein de la première plage de température (Δϑ1) avec une température croissante (ϑ) du catalyseur d'oxydation (34) ;
- une réduction de plus en plus forte du décalage précoce (V) de l'instant d'ouverture (82) et de l'instant de fermeture (92) a lieu dans la région de la température d'amorçage (ϑ_{A}) du catalyseur d'oxydation (34) avec une température croissante (ϑ) du catalyseur d'oxydation (34) ; et
- lors de l'atteinte de la limite de plage supérieure (Δϑ1ₒ) de la première plage de température (Δϑ1), le décalage précoce (V) des réglages de distribution est complètement annulé.

2. Procédé selon la revendication 1,
**caractérisé en ce**
**que** les injections secondaires ont lieu dans au moins un des cylindres (16, 18, 20, 22) du moteur à combustion interne (14) de manière cadencée de telle sorte que des premiers intervalles de temps (38) de durée pouvant être prédéfinie dans lesquels des injections secondaires sont réalisées dans chaque cycle de travail d'un cylindre respectif alternent en succession directe avec des seconds intervalles de temps (40) de durée pouvant être prédéfinie dans lesquels les injections secondaires sont supprimées, et la durée du premier intervalle de temps (38) et/ou la durée du second intervalle de temps (40) sont prédéfinies en fonction de la température (ϑ) du catalyseur d'oxydation (34).

3. Procédé selon la revendication 2,
**caractérisé en ce**
**qu'**un renvoi divisé de gaz d'échappement des cylindres (16, 18, 20, 22) du moteur à combustion interne (14) est prévu dans une voie d'air entrant du moteur à combustion interne (14) de telle sorte que du gaz d'échappement uniquement d'une première partie des cylindres (16, 18, 20, 22) peut être acheminé à une proportion notable à la voie d'air entrant du moteur à combustion interne (14) et du gaz d'échappement de la seconde partie restante des cylindres (16, 18, 20, 22) est acheminé essentiellement entièrement et en renonçant à un renvoi au catalyseur d'oxydation (34), dans lequel des injections secondaires de carburant ont uniquement lieu auprès d'au moins un des cylindres (20, 22) de la seconde partie des cylindres (16, 18, 20, 22).

4. Procédé selon une des revendications 1 à 3,
**caractérisé en ce**
**qu'**un courant d'attaque (Iᵥ) de la soupape d'injection est réglé pour la réalisation des injections secondaires en vue de l'actionnement d'un pointeau de soupape de la soupape d'injection en fonction d'une température (ϑ) du catalyseur d'oxydation (34).

5. Procédé selon la revendication 4,
**caractérisé en ce**
**qu'**une quantité d'injection secondaire (m_{NE}) est limitée au-dessus d'une température pouvant être prédéfinie pour le catalyseur d'oxydation (34) en ce que dans le cas des injections secondaires, une amplitude de course de pointeau (H) réduite par rapport à une amplitude de course de pointeau maximale du pointeau de soupape de la soupape d'injection est réglée.

6. Moteur à combustion interne avec une voie de gaz d'échappement, dans lequel un catalyseur d'oxydation (34) et un filtre à particules (36) monté en aval du catalyseur d'oxydation (34) en termes d'écoulement sont disposés,
**caractérisé en ce**
**que** le moteur à combustion interne est réalisé avec des moyens de commande pour la réalisation d'un procédé selon une des revendications 1 à 5.
